# EUROPEAN PATENT APPLICATION

(11) **EP 4 130 178 A1**
(43) Date of publication of application: **08.02.2023**
(21) Application number: 21774850.8
(22) Date of filing: 24.03.2021
(51) Int. Cl.: C09J 4/00, C09J 11/06, C09J 7/38

(54) **ADHESIVE SHEET MANUFACTURING METHOD AND ADHESIVE SHEET**

(30) Priority: 27.03.2020 JP 2020059015; 23.03.2021 JP 2021048551
(71) Applicant: NITTO DENKO CORPORATION, Ibaraki-shi Osaka 567-8680 (JP)
(72) Inventor: OHARA, Hirotaka, Ibaraki-shi, Osaka 567-8680 (JP); KATAMI, Hirofumi, Ibaraki-shi, Osaka 567-8680 (JP); NONAKA, Takahiro, Ibaraki-shi, Osaka 567-8680 (JP)
(74) Representative: Grünecker Patent- und Rechtsanwälte PartG mbB
(86) International application number: PCT/JP2021/012324
(87) International publication number: WO 2021/193746

(57) **Abstract**

An object of the present invention is to provide: a method for producing a pressure-sensitive adhesive sheet, wherein even in the case of incorporating an ultraviolet absorbing agent into a light-cured pressure-sensitive adhesive sheet, the pressure-sensitive adhesive sheet can be easily designed without a drop in productivity due to deterioration in curability and without changes in physical properties such as a difference in physical properties between the front and the back and a change in release force of a release sheet; and a pressure-sensitive adhesive sheet to be obtained by the production method. The method for producing a pressure-sensitive adhesive sheet of the present invention includes: forming a pressure-sensitive adhesive layer 10 formed of a transparent, light-cured base pressure-sensitive adhesive material on a support S1; irradiating the pressure-sensitive adhesive layer 10 with an ultraviolet ray U to cure the pressure-sensitive adhesive layer; providing a solution 12 of an ultraviolet absorbing agent 11; applying the solution 12 to one of opposite surfaces of the cured pressure-sensitive adhesive layer 10a to cause the ultraviolet absorbing agent 11 contained in the solution 12 to infiltrate from the one surface in a thickness direction of the pressure-sensitive adhesive layer 10a; and drying the pressure-sensitive adhesive layer 10a.

## Description

### Technical Field

The present invention relates to a method for producing a pressure-sensitive adhesive sheet having a transparent pressure-sensitive adhesive layer, and a pressure-sensitive adhesive sheet that can be obtained by the production method. In particular, the present invention relates to a method for producing a pressure-sensitive adhesive sheet having a transparent pressure-sensitive adhesive layer that can be used for bonding a transparent optical element to another optical element, and a pressure-sensitive adhesive sheet that can be obtained by the production method.

### Background Art

An image display device, such as a liquid crystal display device or an organic EL display device, is composed of an optical element laminate in which one of various types of transparent optical elements, such as a polarizing film, a retardation film, and a transparent cover element including a cover glass, is laminated. An adhesive sheet comprising a transparent pressure-sensitive adhesive layer is used for bonding these optical elements to each other. In other words, a pressure-sensitive adhesive sheet is disposed between two optical elements to be bonded together, and then the two optical elements are pressed against each other, so that they are bonded together through the pressure-sensitive adhesive sheet to form an optical element laminate. A pressure-sensitive adhesive sheet provided with the pressure-sensitive adhesive layer on one side of a substrate film is generally used in production processes of an optical product as a surface protective film to prevent scratches or adherence of stain on the optical element.

In an image display device equipped a touch panel, a transparent electroconductive printed layer, such as a patterned ITO (Indium Tin Oxide) layer, is formed on a surface of an optical element. Silver or copper lead wiring is further formed in the peripheral portion. In addition, a black concealing portion is generally printed in a frame shape in the peripheral edge portion of the transparent cover element. The adhesive sheet to which an optical element having such a printed layer and wiring is bonded is required to exhibit level difference absorbability such that no bubbles are left in the printed stepped space.

Solvent-free, light-cured pressure-sensitive adhesive sheets are widely used as such pressure-sensitive adhesive sheets (see, for example, Patent Literature 1). The light-cured pressure-sensitive adhesive sheets have the advantage of having high-level difference absorbability since they are in a partially cured (semi-cured) state before curing and have high fluidity, and being light-cured by ultraviolet irradiation afterward to improve adhesive reliability.

While in an image display device may be sometimes required to have ultraviolet protection properties to prevent deterioration of components and other parts in the image display device due to incident ultraviolet rays. In particular, an organic EL display device deteriorates more quickly due to ultraviolet rays than a liquid crystal display because organic compounds are used as light-emitting elements. Furthermore, as optical elements such as polarizing films and protective films become thinner, their light resistance to ultraviolet rays has decreased, making it essential to provide an ultraviolet absorbing layer. For example, it is known to use a pressure-sensitive adhesive sheet comprising an ultraviolet absorbing layer containing an ultraviolet absorbing agent (see, for example, Patent Literature 2).

On the other hand, a double-coated pressure-sensitive adhesive sheet having no substrate (sometimes referred to herein as a "substrate-less pressure-sensitive adhesive sheet") is used in a form in which each of both surfaces thereof is protected by a release sheet. Lamination of optical elements using the substrate-less pressure-sensitive adhesive sheet is carried out in such a way that one side of the release sheet is first removed from the pressure-sensitive adhesive sheet and then laminated to the first element, the other release sheet is removed, and the second element is laminated thereto. At this point, when the force required to remove each of the two release sheets (release force) is similar, a problem of so-called "parting" occurs, in which a (second) release sheet on a side opposite to a first release sheet is removed at the stage where the first release sheet is removed. Hence, the release forces of the two release sheets provided by the substrate-less pressure-sensitive adhesive sheet are designed to be different from each other.

### Citation List

### Patent Literature

[Patent Literature 1] Japanese Patent Laid-Open No. 2016-222914
[Patent Literature 2] Japanese Patent Laid-Open 2012-211305

### Summary of Invention

### Technical Problem

A pressure-sensitive adhesive sheet in Patent Literature 2 is composed of ultraviolet absorbing layers in which ultraviolet absorbing agents are incorporated into a pressure-sensitive adhesive composition and uniformly dissolved. However there is a problem that the physical properties and curability of the pressure-sensitive adhesive are affected by incorporating a sufficient amount of an ultraviolet absorbing agent to impart ultraviolet protection properties to the pressure-sensitive adhesive composition. In particular, when light-cured pressure-sensitive adhesive sheets blended with ultraviolet absorbing agents are cured by ultraviolet irradiation, there is a problem that the ultraviolet rays are absorbed by the ultraviolet absorbing agents, resulting in deteriorated curability and reduced productivity.

With the light-cured pressure-sensitive adhesive sheet in which ultraviolet absorbing agents are uniformly dissolved, there is also a problem of differences in physical properties such as adhesiveness and viscoelasticity between the front and the back of the pressure-sensitive adhesive sheet. This is because the ultraviolet rays are absorbed by the ultraviolet absorbing agents while passing through the inside of the pressure-sensitive adhesive layer; and the deeper from the surface on the ultraviolet irradiated side, the lower the ultraviolet illuminance, resulting in a difference in the curing speed on the front and back thereof.

Furthermore, with a substrate-less pressure-sensitive adhesive sheet in which ultraviolet absorbing agents are uniformly dissolved in a pressure-sensitive adhesive layer, there is also a problem that the design for the difference in its release force between the two release sheets varies. In other words, if the amount of a polymerization initiator or light quantity of an ultraviolet absorbing agent is increased as a countermeasure for the deterioration in curability caused by the ultraviolet absorbing agent, the release force of the release sheet on the irradiated side becomes larger than that of the design, resulting in problems such as difficulty in removal with a peeler, occurrence of parting due to close release forces of the two release sheets, or reversal of the release forces of the two release sheets. Further, when the release force becomes high, there may be a trouble that the pressure-sensitive adhesive sheet is stretched and deformed due to the force applied thereto at the time of removing the release sheet remaining after the lamination of one release sheet to the first element, so that the pressure-sensitive adhesive sheet cannot be laminated cleanly.

Therefore, when ultraviolet absorbing agents are incorporated into a light-cured pressure-sensitive adhesive sheet, it is necessary to start the design from the beginning, for example, a pressure-sensitive adhesive composition such as an amount of ultraviolet absorbing agent blended, the thickness of the pressure-sensitive adhesive sheet, and curing conditions such as ultraviolet illuminance, in order to maintain its curability and reduce changes in physical properties such as a difference in physical properties between the front and the back and a change in release force of the release sheet.

In particular, as image display devices have become thinner in recent years, there is a growing demand to make the pressure-sensitive adhesive layer thinner and increase the concentration of ultraviolet absorbing agents contained in the pressure-sensitive adhesive composition, and the above problems are becoming more apparent.

The present invention has been made under the circumstances as described above, and an object of the present invention is to provide a method for producing a pressure-sensitive adhesive sheet, wherein even in the case of incorporating an ultraviolet absorbing agent into a light-cured pressure-sensitive adhesive sheet, the pressure-sensitive adhesive sheet can be easily designed without a drop in productivity due to deterioration in curability and without changes in physical properties such as a difference in physical properties between the front and the back and a change in release force of a release sheet.

In addition, another object of the present invention is to provide a pressure-sensitive adhesive sheet that can be easily designed without a drop in productivity due to deterioration in curability and without changes in physical properties such as a difference in physical properties between the front and the back and a change in release force of a release sheet, even in the case of incorporating an ultraviolet absorbing agent into a light-cured pressure-sensitive adhesive sheet.

### Solution to Problem

As a result of intensive studies to achieve the objects, the present inventors have found that a pressure-sensitive adhesive sheet having excellent physical properties of a pressure-sensitive adhesive layer without the problems associated with a change in release force of a release sheet and having excellent ultraviolet protection properties is obtained by giving an ultraviolet absorbing agent to the pressure-sensitive adhesive layer after curing the pressure-sensitive adhesive layer by irradiating it with ultraviolet rays to minimize the influence on the curability of the pressure-sensitive adhesive layer and changes in physical properties such as a difference in physical properties between the front and the back and a change in the release force of the release sheet. The present invention has been completed based on these findings.

In other words, the first aspect of the present invention provides a method for producing a pressure-sensitive adhesive sheet, including:
forming a pressure-sensitive adhesive layer formed of a transparent, light-cured base pressure-sensitive adhesive material on a support;
irradiating the pressure-sensitive adhesive layer with an ultraviolet ray to cure the pressure-sensitive adhesive layer;
providing a solution of an ultraviolet absorbing agent;
applying the solution to one of opposite surfaces of the cured pressure-sensitive adhesive layer to cause the ultraviolet absorbing agent contained in the solution to infiltrate from the one surface in a thickness direction of the pressure-sensitive adhesive layer; and
drying the pressure-sensitive adhesive layer.

The pressure-sensitive adhesive layer can be cured without being affected by the ultraviolet absorbing agent by irradiating the pressure-sensitive adhesive layer with ultraviolet rays before allowing the ultraviolet absorbing agent to be contained in the pressure-sensitive adhesive layer. Therefore, a drop in productivity due to deterioration in curability caused by an ultraviolet absorbing agent and changes in physical properties of the pressure-sensitive adhesive layer, such as a difference in physical properties between the front and the back or of release force of the release sheet, can be minimized.

The solution of the ultraviolet absorbing agent is applied to the pressure-sensitive adhesive layer after curing to cause the ultraviolet absorbing agent to infiltrate the pressure-sensitive adhesive layer. This allows the sufficient ultraviolet protection properties to be imparted to the pressure-sensitive adhesive layer. In addition, the transparency of the pressure-sensitive adhesive layer is maintained by the infiltration of the ultraviolet absorbing agent in a solution form.

Thereafter, the pressure-sensitive adhesive layer is dried by, for example, heating. This step allows the pressure-sensitive adhesive layer to return to a state close to that before application. In other words, since the pressure-sensitive adhesive layer is once cured, physical properties such as adhesiveness and viscoelasticity are restored to a state close to that before the application of the solution.

Since the adhesive layer is cured before the ultraviolet absorbing agent is given thereto, once design such as a composition, curing conditions, and physical properties of an adhesive composition, or release force of a release sheet has been determined, there is no need to redesign the composition due to the incorporation of the ultraviolet absorbing agent and the release force of the release sheet, and the thickness of the pressure-sensitive adhesive layer can be easily changed. Then, it is possible to control the ultraviolet absorbing function imparted to the pressure-sensitive adhesive layer by changing the coating conditions of the ultraviolet absorbing agent solution afterward. Thus, since the control of the physical properties of the pressure-sensitive adhesive layer and release sheet can be separated from the control of the ultraviolet absorbing function, there is no need to design the pressure-sensitive adhesive layer from the beginning with respect to changes in the thickness of the pressure-sensitive adhesive layer, the ultraviolet absorbing function, and the release force of the release sheet, and its efficiency is high.

In the method for producing a pressure-sensitive adhesive sheet according to the first aspect of the present invention, the solution of the ultraviolet absorbing agent may be a solution in which the ultraviolet absorbing agent is dissolved in a solvent, and may include evaporating the solvent of the solution by drying the pressure-sensitive adhesive layer.

By applying the solution of the ultraviolet absorbing agent dissolved in the solvent to the pressure-sensitive adhesive layer after curing, the solvent infiltrates the pressure-sensitive adhesive layer to cause the pressure-sensitive adhesive layer to swell, and the ultraviolet absorbing agent dissolved in the solvent infiltrates the pressure-sensitive adhesive layer that has been swollen by the solvent. This allows the sufficient ultraviolet protection properties to be imparted to the pressure-sensitive adhesive layer, and the transparency of the pressure-sensitive adhesive layer is maintained as the ultraviolet absorbing agent is infiltrated by the solution. The solvent that has infiltrated the pressure-sensitive adhesive layer evaporates by, for example, heating, and the pressure-sensitive adhesive layer returns to a state close to that before swelling. In other words, since the pressure-sensitive adhesive layer is once cured, physical properties such as adhesiveness and viscoelasticity are restored to a state close to that before the application of the solution.

In the method for producing a pressure-sensitive adhesive sheet according to the first aspect of the present invention, the solution of the ultraviolet absorbing agent having a maximum absorption wavelength in an absorption spectrum present in a wavelength region of 380 to 430 nm may further contain a dye compound. In addition, the method for producing a pressure-sensitive adhesive sheet according to the first aspect of the present invention may further include providing a solution of a dye compound having a maximum absorption wavelength in an absorption spectrum present in a wavelength region of 380 to 430 nm, and applying the solution to one of opposite surfaces of the cured pressure-sensitive adhesive layer. These configurations are preferable in terms of imparting absorbing function to the pressure-sensitive adhesive layer for light in the wavelength region (380 nm to 430 nm) corresponding to a wavelength longer than the ultraviolet absorbing agent to suppress the deterioration of an organic EL element or the like more sufficiently.

The solution of the dye compound may be a solution in which the dye compound is dissolved in a solvent.

The method for producing a pressure-sensitive adhesive sheet according to the first aspect of the present invention may further comprise laminating a release sheet onto a surface of the pressure-sensitive adhesive layer on a side opposite to the support. It is preferable that the pressure-sensitive adhesive layer surface can be protected by laminating a release sheet.

In the method for producing a pressure-sensitive adhesive sheet according to the first aspect of the present invention, a maximum absorption wavelength of the ultraviolet absorbing agent in an absorption spectrum is preferably present in a wavelength region of 300 to 400 nm. With this configuration, it is possible to efficiently suppress the deterioration of an image display device, especially an organic EL display device, caused by UVA.

The second aspect of the present invention also provides:
a pressure-sensitive adhesive sheet having a support and a transparent light-cured pressure-sensitive adhesive layer on the support, wherein:
   the pressure-sensitive adhesive layer is a single layer comprising a transparent base pressure-sensitive adhesive material and having two opposite principal surfaces;
   an ultraviolet absorbing agent is dissolved in the pressure-sensitive adhesive layer; and
   in a case where the single pressure-sensitive adhesive layer is divided into two equal portions in a thickness direction,
a concentration of the ultraviolet absorbing agent in an area to which one of the two principal surfaces, a first principal surface, belongs is different from a concentration of the ultraviolet absorbing agent in an area to which the other principal surface, a second principal surface, belongs.

The pressure-sensitive adhesive sheet according to the second aspect of the present invention can be obtained by the method for producing the pressure-sensitive adhesive sheet according to the first aspect of the present invention. By applying a solution of ultraviolet absorbing agents onto one of opposite surfaces of the pressure-sensitive adhesive layer to cause it to infiltrate, a concentration difference of the ultraviolet absorbing agents may occur on the front and back of the pressure-sensitive adhesive layer. The pressure-sensitive adhesive sheet in which this configuration may occur, as described above, can minimize a drop in productivity due to deterioration in curability caused by an ultraviolet absorbing agent and changes in the physical properties of the pressure-sensitive adhesive layer, such as a difference in physical properties between the front and the back and a change in release force of the release sheet.

Note that in the method for producing a pressure-sensitive adhesive sheet according to the first aspect of the present invention, the concentration of the ultraviolet absorbing agent may be the same or substantially the same on the front and back of the pressure-sensitive adhesive layer, depending on conditions such as the thickness of the pressure-sensitive adhesive layer and the infiltration time of the ultraviolet absorbing agent. Therefore, the present invention also includes a case where a pressure-sensitive adhesive sheet having the same or substantially the same ultraviolet absorbing agent concentration on the front and back of the pressure-sensitive adhesive layer is obtained by the method for producing a pressure-sensitive adhesive sheet according to the first aspect of the present invention.

In the pressure-sensitive adhesive sheet according to the second aspect of the present invention, a dye compound having a maximum absorption wavelength in an absorption spectrum present in a wavelength region of 380 to 430 nm may be further dissolved. This configuration is preferable in terms of imparting absorbing function to the pressure-sensitive adhesive layer for light in the wavelength region (380 nm to 430 nm) corresponding to a wavelength longer than the ultraviolet absorbing agent to suppress the deterioration of the organic EL element or the like more sufficiently.

In the pressure-sensitive adhesive sheet according to the second aspect of the present invention, a difference between an adhesive strength (N/10 mm) of the first principal surface and an adhesive strength (N/10 mm) of the second principal surface is preferably 1.0 N/10 mm or less. This configuration is preferable in terms of allowing two transparent optical elements to be bonded without any difference in adhesive strength. The difference in the adhesive strength (N/10 mm) is preferably 0.5 N/10 mm or less and more preferably 0.3 N/10 mm or less.

In the pressure-sensitive adhesive sheet according to the second aspect of the present invention, the pressure-sensitive adhesive layer is preferably a pressure-sensitive adhesive layer cured by ultraviolet irradiation. This configuration is preferable in terms of minimizing a drop in productivity due to the deterioration in curability caused by the ultraviolet absorbing agent and changes in the physical properties such as a difference in physical properties between the front and back and a change in release force of the release sheet.

In the pressure-sensitive adhesive sheet according to the second aspect of the present invention, the second principal surface faces the support, and the concentration of the ultraviolet absorbing agent in the area to which the first principal surface belongs is preferably higher than the concentration of the ultraviolet absorbing agent in the area to which the second principal surface belongs. This configuration may be obtained by applying a solution of the ultraviolet absorbing agent to the first principal surface.

In the pressure-sensitive adhesive sheet according to the second aspect of the present invention, the single light-cured pressure-sensitive adhesive layer preferably has a concentration gradient of the ultraviolet absorbing agent in the thickness direction. This configuration may be obtained by applying a solution of the ultraviolet absorbing agent to one of opposite principal surfaces of the pressure-sensitive adhesive layer.

In the pressure-sensitive adhesive sheet according to the second aspect of the present invention, the support is preferably a release sheet. In this case, the support being the release sheet is preferably disposed on each of both surfaces of the pressure-sensitive adhesive layer. It is preferable in that the support being a release sheet can be bonded to a transparent optical element after being removed.

In the pressure-sensitive adhesive sheet according to the second aspect of the present invention, a maximum absorption wavelength of the ultraviolet absorbing agent in an absorption spectrum is preferably present in a wavelength region of 300 to 400 nm. With this configuration, it is possible to efficiently suppress the deterioration of an image display device, especially an organic EL display device, caused by UVA.

In the pressure-sensitive adhesive sheet according to the second aspect of the present invention, the thickness of the pressure-sensitive adhesive layer is preferably 5 um to 500 um. If the thickness of the pressure-sensitive adhesive layer is in this range, it is preferable to form a concentration gradient of the ultraviolet absorbing agents in the thickness direction of the pressure-sensitive adhesive layer. The thickness of the pressure-sensitive adhesive layer is more preferably 5 um to 400 um and even more preferably 50 um to 400 um.

### Advantageous Effects of Invention

According to the method for producing a pressure-sensitive adhesive sheet and the pressure-sensitive adhesive sheet of the present invention, a drop in productivity due to deterioration in curability of the pressure-sensitive adhesive layer and changes in physical properties such as a difference in physical properties between the front and the back and a change in release force of a release sheet hardly occur, even in the case of incorporating an ultraviolet absorbing agent into a light-cured pressure-sensitive adhesive sheet.

In addition, there is no need to design the pressure-sensitive adhesive layer from the beginning with respect to changes in the thickness of the pressure-sensitive adhesive layer, the ultraviolet absorbing function, and the removal of the release sheet, and its efficiency is high.

### Brief Description of Drawings

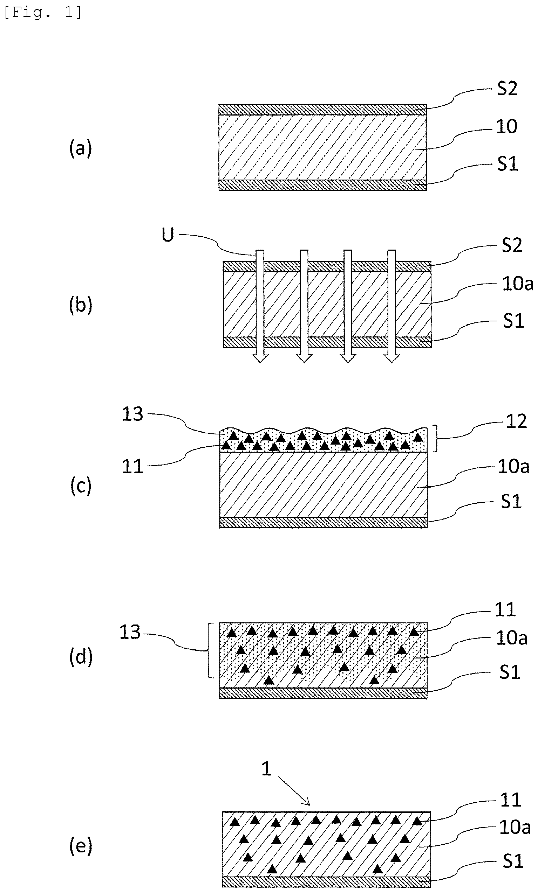

[Figure 1] Figure 1 illustrates a process for implementing one embodiment of a method for producing a pressure-sensitive adhesive sheet according to the present invention, in which Figure 1(a) is a schematic view illustrating a pressure-sensitive adhesive layer forming step, Figure 1(b) is a schematic view illustrating a pressure-sensitive adhesive layer curing step, Figure 1(c) is a schematic view illustrating a solution application step, Figure 1(d) is a schematic view illustrating a solution infiltration step, and Figure 1(e) is a schematic view illustrating a drying step.

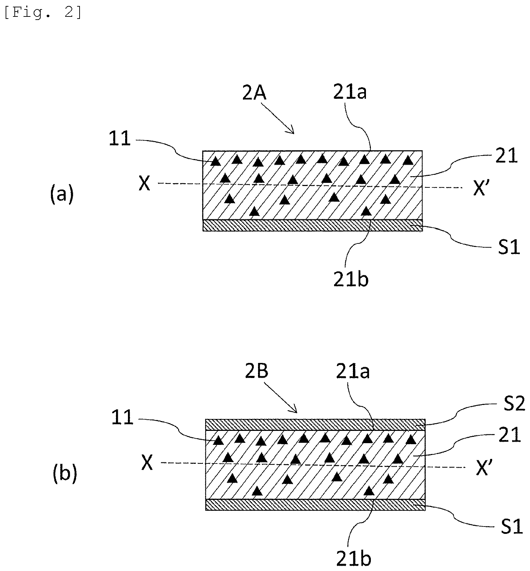

[Figure 2] Figure 2(a) is a cross-sectional view illustrating one embodiment of the pressure-sensitive adhesive sheet according to the present invention, and Figure 2(b) is a cross-sectional view illustrating another embodiment of the pressure-sensitive adhesive sheet according to the present invention.

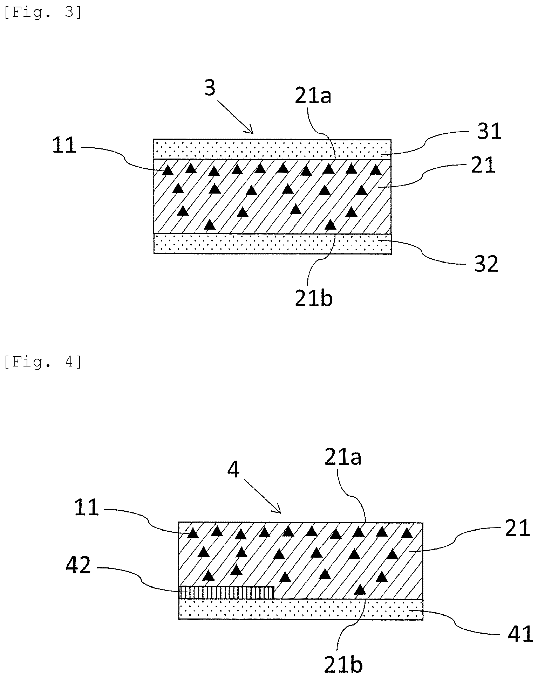

[Figure 3] Figure 3 is a cross-sectional view of an optical element laminate presented as one example of the simplest embodiment using a pressure-sensitive adhesive sheet according to the present invention.
[Figure 4] Figure 4 is a cross-sectional view illustrating an embodiment in which a pressure-sensitive adhesive layer is applied to a configuration obtained by forming a patterned transparent electroconductive layer.

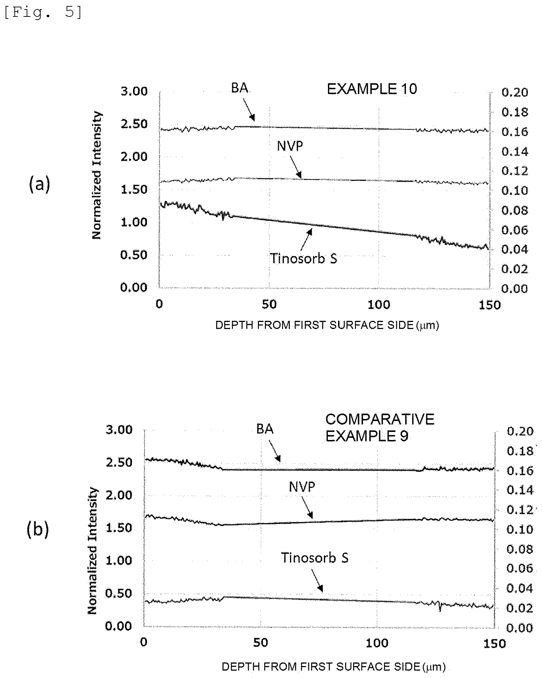

[Figure 5] Figure 5 is a graph showing results of TOF-SIMS analysis on the pressure-sensitive adhesive sheets of Example 10 and Comparative Example 9. Figure 5(a) shows the results of Example 10, and Figure 5(b) shows the results of Comparative Example 9. In Figure 5, the scale of the left vertical axis indicates the intensity of butyl acrylate (BA) and N-vinylpyrrolidone (NVP) and the scale of the right vertical axis indicates the intensity of the ultraviolet absorbing agent (Tinosorb S).

### Description of Embodiments

Hereinafter, embodiments of the present invention will be described with reference to the accompanying figures, but the present invention is not limited thereto. The embodiments are merely illustrative.

Figures 1 (a) to (e) are views schematically illustrating a process for implementing one embodiment of a method for producing a pressure-sensitive adhesive sheet according to the first aspect of the present invention.

As illustrated in Figure 1(a), a pressure-sensitive adhesive layer 10 formed of a transparent light-cured base pressure-sensitive adhesive material is first formed on a support S1 (pressure-sensitive adhesive layer forming step).

The support is not particularly limited and is preferably a plastic film. Examples of materials of the plastic film and the like include plastic materials such as polyester resins including polyethylene terephthalate (PET); acrylic resins including polymethyl methacrylate (PMMA); polycarbonate; triacetyl cellulose (TAC); polysulfone; polyacrylate; polyimide; polyvinyl chloride; polyvinyl acetate; polyethylene; polypropylene; ethylenepropylene copolymer; cyclic olefin-based polymer including trade name "ARTON" (cyclic olefin-based polymer, manufactured by JSR Corporation) and trade name "ZEONOR" (cyclic olefin-based polymer, Zeon Corporation). Note that these plastic materials may be used either alone or in combination of two or more thereof.

The support may be a release sheet. Examples of the release sheet include, but not particularly limited to, a plastic film whose surface is treated by a release agent such as silicon type, long-chain alkyl type, fluorine type, and molybdenum sulfide.

The light-cured base pressure-sensitive adhesive material is not particularly limited as long as it is a transparent adherent material usable in optical applications. For example, it is possible to use one or more appropriately selected from an acrylic pressure-sensitive adhesive, a rubber-based pressure-sensitive adhesive, a silicone-based pressure-sensitive adhesive, a polyester-based pressure-sensitive adhesive, a urethane-based pressure-sensitive adhesive, an epoxy-based pressure-sensitive adhesive, and a polyether-based pressure-sensitive adhesive. From the viewpoint of transparency, processability, durability, etc., it is preferable to use an acrylic pressure-sensitive adhesive. As the light-cured base pressure-sensitive adhesive material, the above pressure-sensitive adhesives can be used independently or in combination of two or more thereof. An acrylic polymer to be used as a base polymer of an acrylic pressure-sensitive adhesive is preferably, but not particularly limited to, a homopolymer or a copolymer of monomers containing a primary component consisting of (meth)acrylic acid alkyl ester. The expression "(meth)acrylic" is used herein to mean either one or both of "acrylic" and "methacrylic", and the same applies to the other. In the present invention, the term "acrylic polymer" is used to mean that it may include the above (meth)acrylic acid alkyl ester and another monomer copolymerizable with it.

When the light-cured base pressure-sensitive adhesive material contains an acrylic polymer as an acrylic pressure-sensitive adhesive, the acrylic polymer preferably contains a monomer unit derived from an acrylic acid alkyl ester having a linear or branched alkyl group and/or a methacrylic acid alkyl ester having a linear or branched alkyl group as the main monomer unit in the highest proportion by weight.

Examples of the (meth)acrylic acid alkyl ester having a linear or branched alkyl group to constitute the monomer unit of the acrylic polymer, i.e., the (meth)acrylic acid alkyl ester having a linear or branched alkyl group contained in a monomer component to form the acrylic polymer, include a (meth)acrylic acid alkyl ester having a linear or branched alkyl group with 1 to 20 carbon atoms, such as methyl (meth)acrylate, ethyl (meth)acrylate, propyl (meth)acrylate, isopropyl (meth)acrylate, n-butyl (meth)acrylate, s-butyl (meth)acrylate, isobutyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, isostearyl (meth)acrylate, nonadecyl (meth)acrylate, and eicosyl (meth)acrylate. As the (meth)acrylic acid alkyl ester for the acrylic polymer, one (meth)acrylic acid alkyl ester may be used, or two or more (meth)acrylic acid alkyl esters may be used. In the present embodiment, at least one selected from the group consisting of n-butyl acrylate, 2-ethylhexyl acrylate, and isostearyl acrylate is preferably used as the (meth)acrylic acid alkyl ester for the acrylic polymer.

In the acrylic polymer, a proportion of the monomer unit derived from the (meth)acrylic acid alkyl ester having a linear or branched alkyl group is preferably 50% by weight or more, more preferably 60% by weight or more, more preferably 70% by weight or more, more preferably 80% by weight or more, and more preferably 90% by weight or more. In other words, the proportion of the (meth)acrylic acid alkyl ester in a monomer composition of a raw material to form the acrylic polymer is preferably 50% by weight or more, more preferably 60% by weight or more, more preferably 70% by weight or more, more preferably 80% by weight or more, and more preferably 90% by weight or more.

The acrylic polymer contained in the light-cured base pressure-sensitive adhesive material may contain a monomer unit derived from an alicyclic monomer. Examples of the alicyclic monomer to constitute the monomer unit of the acrylic polymer, i.e., the alicyclic monomer contained in the monomer component to form the acrylic polymer, include (meth)acrylic acid cycloalkyl ester, (meth)acrylic acid ester having a bicyclic hydrocarbon ring, and (meth)acrylic acid ester having a tricyclic or more hydrocarbon ring. Examples of the (meth)acrylic acid cycloalkyl ester include cyclopentyl (meth)acrylate, cyclohexyl (meth)acrylate, cycloheptyl (meth)acrylate, and cyclooctyl (meth)acrylate. Examples of the (meth)acrylic acid ester having bicyclic hydrocarbon ring include bornyl (meth)acrylate and isobornyl (meth)acrylate. Examples of the (meth)acrylic acid ester having a tricyclic or more hydrocarbon ring include dicyclopentanyl (meth)acrylate, dicyclopentanyloxyethyl (meth)acrylate, tricyclopentanyl (meth)acrylate, 1-adamantyl (meth)acrylate, 2-methyl-2-adamantyl (meth)acrylate, and 2-ethyl-2-adamantyl (meth)acrylate. As the alicyclic monomer for the acrylic polymer, one alicyclic monomer may be used, or two or more alicyclic monomers may be used. In the present embodiment, at least one selected from the group consisting of cyclohexyl acrylate, cyclohexyl methacrylate, isobornyl acrylate, and isobornyl methacrylate is preferably used as the alicyclic monomer for the acrylic polymer.

In the acrylic polymer, a proportion of the monomer unit derived from the alicyclic monomer is preferably 5 to 60% by weight, more preferably 10 to 50% by weight, more preferably 12 to 40% by weight, from the viewpoint of realizing appropriate flexibility in the light-cured base pressure-sensitive adhesive material formed containing the acrylic polymer.

The acrylic polymer contained in the light-cured base pressure-sensitive adhesive material may contain a monomer unit derived from a hydroxy group-containing monomer. The hydroxy group-containing monomer is a monomer having at least one hydroxy group in its monomer unit. When the acrylic polymer in the light-cured base pressure-sensitive adhesive material contains a hydroxy group-containing monomer unit, the light-cured base pressure-sensitive adhesive material readily offers adhesiveness and appropriate cohesive force.

Examples of the hydroxy group-containing monomer to constitute a monomer unit of the acrylic polymer, i.e., the hydroxy group-containing monomer contained in the monomer component to form the acrylic polymer, include hydroxy group-containing (meth)acrylic acid ester, vinyl alcohol, and allyl alcohol. Examples of the hydroxy group-containing (meth)acrylic acid ester include 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl (meth)acrylate. As the hydroxy group-containing monomer for the acrylic polymer, one hydroxy group-containing monomer may be used, or two or more hydroxy group-containing monomers may be used. In the present embodiment, at least one selected from the group consisting of 2-hydroxyethyl acrylate, 2-hydroxyethyl methacrylate, 2-hydroxypropyl acrylate, 2-hydroxypropyl methacrylate, 4-hydroxybutyl acrylate, and 4-hydroxybutyl methacrylate is preferably used as the hydroxy group-containing monomer for the acrylic polymer.

In the acrylic polymer, a proportion of the monomer unit derived from the hydroxy group-containing monomer is preferably 1% by weight or more, more preferably 2% by weight or more, more preferably 3% by weight or more, more preferably 7% by weight or more, more preferably 10% by weight or more, and more preferably 15% by weight or more. In the acrylic polymer, the proportion of the monomer unit derived from the hydroxy group-containing monomer is preferably 35% by weight or less and more preferably 30% by weight or less. These configurations regarding the proportion of the hydroxy group-containing monomer are preferable to realize adhesiveness and appropriate cohesive force in the light-cured base pressure-sensitive adhesive material formed containing the acrylic polymer.

The acrylic polymer contained in the light-cured base pressure-sensitive adhesive material may contain a monomer unit derived from a nitrogen atom-containing monomer. The nitrogen atom-containing monomer is a monomer having at least one nitrogen atom in its monomer unit. When the acrylic polymer in the light-cured base pressure-sensitive adhesive material contains a nitrogen atom-containing monomer unit, the light-cured base pressure-sensitive adhesive material readily offers hardness and satisfactory adhesive reliability.

Examples of the nitrogen atom-containing monomer to constitute a monomer unit of the acrylic polymer, i.e., the nitrogen atom-containing monomer contained in the monomer component to form the acrylic polymer, include cyclic N-vinylamides and (meth)acrylamides. Examples of the cyclic N-vinylamides which are nitrogen atom-containing monomers include N-vinyl-2-pyrrolidone, N-vinyl-2-piperidone, N-vinyl-3-morpholinone, N-vinyl-2-caprolactam, N-vinyl-1,3-oxazin-2-one, and N-vinyl-3,5-morpholinedione. Examples of the (meth)acrylamides which are nitrogen atom-containing monomers include (meth)acrylamide, N-ethyl (meth)acrylamide, N-isopropyl (meth)acrylamide, N-n-butyl (meth)acrylamide, N-octyl (meth)acrylamide, N,N-dimethyl (meth)acrylamide, N,N-diethyl (meth)acrylamide, N,N-dipropyl (meth)acrylamide, and N,N-diisopropyl (meth)acrylamide. As the nitrogen atom-containing monomer for the acrylic polymer, one nitrogen atom-containing monomer may be used, or two or more nitrogen atom-containing monomers may be used. In the present embodiment, N-vinyl-2-pyrrolidone is preferably used as the nitrogen atom-containing monomer for the acrylic polymer.

In the acrylic polymer, a proportion of the monomer unit derived from the nitrogen atom-containing monomer is preferably 1% by weight or more, more preferably 3% by weight or more, and more preferably 5% by weight or more, from the viewpoint of realizing appropriate hardness, adhesiveness, and transparency in the light-cured base pressure-sensitive adhesive material formed containing the acrylic polymer. In the acrylic polymer, the proportion of the monomer unit derived from the nitrogen atom-containing monomer is preferably 30% by weight or less and more preferably 25% by weight or less, from the viewpoint of realizing sufficient transparency in the light-cured base pressure-sensitive adhesive material formed by containing the acrylic polymer and the viewpoint of suppressing the light-cured base pressure-sensitive adhesive material from becoming excessively hard to realize satisfactory adhesive reliability.

The acrylic polymer contained in the light-cured base pressure-sensitive adhesive material may contain a monomer unit derived from a carboxy group-containing monomer. The carboxy group-containing monomer is a monomer having at least one carboxy group in its monomer unit. When the acrylic polymer in the light-cured base pressure-sensitive adhesive material contains a carboxy group-containing monomer unit, the light-cured base pressure-sensitive adhesive material may offer satisfactory adhesive reliability

Examples of the carboxy group-containing monomer to constitute a monomer unit of the acrylic polymer, i.e., the carboxy group-containing monomer contained in the monomer component to form the acrylic polymer, include (meth)acrylic acid, itaconic acid, maleic acid, fumaric acid, crotonic acid, and isocrotonic acid. As the carboxy group-containing monomer for the acrylic polymer, one carboxy group-containing monomer may be used, or two or more carboxy group-containing monomers may be used. In the present embodiment, acrylic acid is preferably used as the carboxy group-containing monomer for the acrylic polymer.

In the acrylic polymer, a proportion of the monomer unit derived from the carboxy group-containing monomer is preferably 0.1% by weight or more and more preferably 0.5% by weight or more, from the viewpoint of obtaining a contribution of interaction between a polar group and a carboxy group when the polar group is present on an object surface in the light-cured base pressure-sensitive adhesive material formed by containing the acrylic polymer to ensure satisfactory adhesive reliability. In the acrylic polymer, the proportion of the monomer unit derived from the carboxy group-containing monomer is also preferably 20% by weight or less and more preferably 15% by weight or less, from the viewpoint of suppressing the light-cured base pressure-sensitive adhesive material formed by containing the acrylic polymer from becoming excessively hard to realize satisfactory adhesive reliability.

The acrylic polymer contained in the light-cured base pressure-sensitive adhesive material may have a crosslinked structure derived from polyfunctional (meth)acrylate which is a copolymerizable crosslinking agent. Examples of the polyfunctional (meth)acrylate include 1,6-hexanediol di(meth)acrylate,butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl(meth)acrylate, and vinyl(meth)acrylate. As the polyfunctional (meth)acrylate for the acrylic polymer, one polyfunctional (meth)acrylate may be used, or two or more polyfunctional (meth)acrylates may be used. In the present embodiment, at least one selected from the group consisting of 1,6-hexanediol diacrylate, dipentaerythritol hexaacrylate, and trimethylolpropane triacrylate is preferably used as the polyfunctional (meth)acrylate for the acrylic polymer.

In the acrylic polymer, a proportion of the monomer unit derived from the polyfunctional (meth)acrylate is preferably 0.01% by weight or more, more preferably 0.03% by weight or more, more preferably 0.05% by weight or more, more preferably 0.1% by weight or more. In the acrylic polymer, the proportion of the monomer unit derived from the polyfunctional (meth)acrylate is preferably 1% by weight or less and more preferably 0.5% by weight or less. These configurations regarding the proportion of the polyfunctional (meth)acrylate are preferable to realize appropriate hardness and adhesiveness in the light-cured base pressure-sensitive adhesive material formed by containing the acrylic polymer.

When the light-cured base pressure-sensitive adhesive material contains the above acrylic polymer as a pressure-sensitive adhesive, a content ratio of the acrylic polymer in the light-cured base pressure-sensitive adhesive material is, for example, 85 to 100% by weight.

The light-cured base pressure-sensitive adhesive material may also contain a photopolymerization initiator in addition to the monomer to form the acrylic polymer. Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator. Examples of the benzoin ether-based photopolymerization initiator include benzoin methyl ether, benzoin ethyl ether, benzoin propyl ether, benzoin isopropyl ether, benzoin isobutyl ether, and 2,2-dimethoxy-1,2-diphenylethan-1-one. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxy dichloroacetophenone, and 4-(t-butyl)dichloroacetophenone. Examples of the α-ketol-based photopolymerization initiator include 2-methyl-2-hydroxy propiophenone, and 1-[4-(2-hydroxyethyl)phenyl]-2-methylpropan-1-one. Examples of the aromatic sulfonyl chloride-based photopolymerization initiator include 2-naphthalenesulfonyl chloride. Examples of the photoactive oxime-based photopolymerization initiator include 1-phenyl-1,1-propanedione-2-(o-ethoxycarbonyl)-oxime. Examples of the benzoin-based photopolymerization initiator include benzoin. Examples of the benzyl-based photopolymerization initiator include benzyl. Examples of the benzophenone-based photopolymerization initiator include benzophenone, benzoylbenzoic acid, 3,3'-dimethyl-4-methoxy benzophenone, and polyvinyl benzophenone. Examples of the ketal-based photopolymerization initiator include benzyl dimethyl ketal. Examples of the thioxanthone-based photopolymerization initiator include thioxanthone, 2-chloro thioxanthone, 2-methyl thioxanthone, 2,4-dimethyl thioxanthone, isopropyl thioxanthone, 2,4-diisopropyl thioxanthone, and dodecyl thioxanthone. The light-cured base pressure-sensitive adhesive material may contain one of the photopolymerization initiators or two or more of the photopolymerization initiators. The content of the photopolymerization initiator in the light-cured base pressure-sensitive adhesive material is, for example, 0.01 to 3% by weight.

The light-cured base pressure-sensitive adhesive material may further contain additives, such as a crosslinking agent, a crosslinking accelerator, a silane coupling agent, a tackifier resin, an anti-aging agent, a filler, a coloring agent including pigment and dye, an antioxidant, a chain transfer agent, a plasticizer, a softener, a surfactant, a rust inhibitor, and an antistatic agent if necessary. Examples of the tackifier resin include a rosin derivative, polyterpene resin, petroleum resin, and oil-soluble phenol.

Note that, it is preferable that the light-cured base pressure-sensitive adhesive material does not contain or substantially contain the ultraviolet absorbing agent. Such a configuration is preferable in terms of minimizing deterioration in curability, differences in physical properties between the front and back and a change in release force of the release sheet, when the pressure-sensitive adhesive sheet of the present invention is subjected to a curing step of the pressure-sensitive adhesive layer described later. When a proportion of the ultraviolet absorbing agent is 0.05% by weight or less (preferably 0.01% by mass or less) in the total content of the light-cured base pressure-sensitive adhesive material (100% by mass), the light-cured base pressure-sensitive adhesive material does not substantially contain the ultraviolet absorbing agent.

Examples of methods of forming the pressure-sensitive adhesive layer include, but not particularly limited to, applying (coating) the light-cured base pressure-sensitive adhesive material on a support to dry and cure the resulting pressure-sensitive adhesive composition layer; and applying (coating) the light-cured base pressure-sensitive adhesive material on a support to cure the resulting pressure-sensitive adhesive composition layer by irradiation with an active energy ray. If necessary, the methods may further include heating and drying.

For the application (coating) in the light-cured base pressure-sensitive adhesive material, it is possible to use known coating processes, and examples thereof include a coater, such as a gravure roll coater a reverse roll coater, a kiss roll coater, a dip roll coater, a bar coater, a knife coater, a spray coater, a comma coater, or a direct coater.

The drying and curing temperature is preferably 40 to 200°C, more preferably 50 to 180°C, and even more preferably 70 to 170°C. The drying and curing time may be adopted as appropriate and is, for example, 5 seconds to 20 minutes, preferably 5 seconds to 10 minutes, and more preferably 10 seconds to 5 minutes.

Examples of the active energy ray include ionizing radiations such as an α-ray, a β-ray, a γ-ray, a neutron ray, and an electron ray and ultraviolet rays, and particularly, the ultraviolet rays are preferable. Irradiation energy, irradiation time, and irradiation method of the active energy ray are not particularly limited, and each may be set appropriately to achieve a desired viscosity and viscoelasticity, depending on a thickness of a pressure-sensitive adhesive layer 10 or the like.

A principal surface of the pressure-sensitive adhesive layer formed above that does not face the support is preferably further laminated with another support (including a release sheet) to block oxygen that inhibits curing by the above active energy ray and/or ultraviolet irradiation described later.

Next, as illustrated in Figure 1(b), the pressure-sensitive adhesive layer 10 is cured by irradiating the pressure-sensitive adhesive layer 10 with an ultraviolet ray U. In Figure 1(b), 10a is a pressure-sensitive adhesive layer in which the pressure-sensitive adhesive layer 10 is cured. Since the pressure-sensitive adhesive layer at this stage does not contain or substantially contain an ultraviolet absorbing agent, a drop in productivity due to deterioration in curability caused by the ultraviolet absorbing agent and changes in physical properties such as a difference in physical properties between the front and the back and a change in release force of a release sheet hardly occur, making it possible to form a highly reliable adhesive layer 10a.

The pressure-sensitive adhesive layer 10 may be directly irradiated with ultraviolet rays but is preferably irradiated through a support to block oxygen that inhibits curing by ultraviolet irradiation. Figure 1(b) is an embodiment in which the pressure-sensitive adhesive layer 10 is irradiated with ultraviolet rays through a support S2. When ultraviolet rays are irradiated through a support, another support S2 (including a release sheet) is laminated onto a principal surface of the pressure-sensitive adhesive layer 10 opposite to the principal surface facing the support S1 to irradiate the ultraviolet rays through the support. The illuminance and time of ultraviolet irradiation are appropriately set according to the composition of the light-cured base pressure-sensitive adhesive material and the thickness of the pressure-sensitive adhesive layer. For the ultraviolet irradiation, a high-pressure mercury lamp, a low-pressure mercury lamp, a metal halide lamp, and the like can be used.

Next, as illustrated in Figure 1(c), after the support S2 is released and removed, a solution 12 of an ultraviolet absorbing agent 11 is applied to one of opposite surfaces of the pressure-sensitive adhesive layer 10a (solution application step). The solution of the ultraviolet absorbing agent is not particularly limited as long as it can be coated on the pressure-sensitive adhesive layer in liquid form and infiltrates. When the ultraviolet absorbing agent is in liquid form, for example, the ultraviolet absorbing agent itself may be applied as a solution as it is. It may also be a solution in which the ultraviolet absorbing agent is dissolved in a solvent. Alternatively, the ultraviolet absorbing agent may be a solution mixed with the dye compound described below. Figure 1(c) is an embodiment of applying a solution 12 in which an ultraviolet absorbing agent 11 is dissolved in a solvent 13 to one of opposite surfaces of the pressure-sensitive adhesive layer 10a.

On the surface of the pressure-sensitive adhesive layer 10a, the ultraviolet absorbing agent 11 in the solution 12 infiltrates into the pressure-sensitive adhesive layer 10a in the thickness direction (solution infiltration step). This state is illustrated in Figure 1(d). When the solution 12 is a solution in which the ultraviolet absorbing agent 11 is dissolved in the solvent 13, the surface of the pressure-sensitive adhesive layer 10a is swollen by the infiltration of the solvent 13, and the ultraviolet absorbing agent 11 infiltrates into the pressure-sensitive adhesive layer 10a in a dissolved state in the solvent. The ultraviolet absorbing agent 11 becomes "dissolved" within the pressure-sensitive adhesive layer 10a.

In the process of causing the ultraviolet absorbing agent 11 to infiltrate the pressure-sensitive adhesive layer 10a, a concentration gradient can be formed in the thickness direction. Therefore, the concentration of the ultraviolet absorbing agent 11 on a side to which the solution 12 is applied can be higher than on the opposite side. This state is illustrated in Figure 1(d).

Thereafter, a pressure-sensitive adhesive sheet 1 as illustrated in Figure 1(e) can be obtained by drying the pressure-sensitive adhesive layer 10a (drying step). When the solution 12 is a solution in which the ultraviolet absorbing agent 11 is dissolved in the solvent 13, the infiltrated solvent 13 is evaporated by drying step. The pressure-sensitive adhesive layer 10a returns to a state close to that before application by drying the pressure-sensitive adhesive layer 10a. Therefore, the difference in physical properties between the front and the back and the change in the release force of the release sheet can be minimized. Once the pressure-sensitive adhesive layer 10a is dried, the infiltration of the ultraviolet absorbing agent 11 into the pressure-sensitive adhesive layer 10a stopped, and the concentration gradient of the ultraviolet absorbing agent is fixed.

Examples of the ultraviolet absorbing agent include, but not particularly limited to, a triazine-based ultraviolet absorbing agent, a benzotriazole-based ultraviolet absorbing agent, a benzophenone-based ultraviolet absorbing agent, an oxybenzophenone-based ultraviolet absorbing agent, a salicylic acid ester-based ultraviolet absorbing agent, and a cyanoacrylic acid-based ultraviolet absorbing agent, and they can be used alone or in combination of two or more. Among them, preferred are a triazine-based ultraviolet absorbing agent, a benzotriazole-based ultraviolet absorbing agent, and a benzophenone-based ultraviolet absorbing agent; and particularly preferred is at least one ultraviolet absorbing agent selected from the group consisting of a triazine-based ultraviolet absorbing agent having, in a single molecule thereof, not more than two hydroxyl groups, a benzotriazole-based ultraviolet absorbing agent having, in a single molecule thereof, one benzotriazole skeleton, and a benzophenone-based ultraviolet absorbing agent since it is good in solubility and high in ultraviolet absorbing power at a wavelength of 380 nm and thereabouts.

Specific examples of the triazine-based an ultraviolet absorbing agent having, in a single molecule thereof, not more than two hydroxyl groups include 2,4-bis-[{4-(4-ethylhexyloxy)-4-hydroxy }-phenyl]-6-(4-methoxyphenyl)-1,3,5-triazine (Tinosorb S, manufactured by BASF); 2,4-bis[2-hydroxy-4-butoxyphenyl]-6-(2,4-dibutoxyphenyl)-1,3,5-triazine (TINUVIN 460, manufactured by BASF); a reaction product made from 2-(4,6-bis(2,4-dimethylphenyl)-1,3,5-triazin-2-yl)-5-hydroxy phenyl and [(C₁₀-C₁₆ (mainly C₁₂-C₁₃) alkyloxy) methyl] oxirane (TINUVIN400, manufactured by BASF); a reaction product made from 2-[4,6-bis(2,4-dimethylphenyl)-1,3,5-triazin-2-yl]-5-[3-(dodecyloxy)-2-hydroxypropoxy]phenol), 2-(2,4-dihydroxy phenyl)-4,6-bis-(2,4-dimethylphenyl)-1,3,5-triazine, and (2-ethylhexyl)-glycidic acid ester (TINUVIN405, manufactured by BASF); 2-(4,6-diphenyl-1,3,5-triazin-2-yl)-5-[(hexyl)oxy]-phenol (TINUVIN1577, manufactured by BASF); 2-(4,6-diphenyl-1,3,5-triazine-2-yl)-5-[2-(2-ethylhexanoyloxy)ethoxy]-phenol (ADK STAB LA46, manufactured by ADEKA Corporation); and 2-(2-hydroxy-4-[1-octyloxycarbonylethoxy]phenyl)-4,6-bis(4-phenylphenyl)-1,3,5-triazine (TINUVIN 479, manufactured by BASF) .

Examples of the benzotriazole-based ultraviolet absorbing agent having, in a single molecule thereof, one benzotriazole skeleton include 2-(2H-benzotriazol-2-yl)-6-(1-methyl-1-phenylethyl)-4-(1,1,3,3-tetramethylbutyl)phenol (TINUVIN 928, manufactured by BASF); 2-(2-hydroxy-5-tert-butyl phenyl)-2H-benzotriazole (TINUVIN PS, manufactured by BASF); an ester compound of benzenepropanoic acid and 3-(2H-benzotriazol-2-yl)-5-(1,1-dimethylethyl)-4-hydroxy (C₇₋₉ side chain and linear alkyls) (TINUVIN 384-2, manufactured by BASF); 2-(2H-benzotriazol-2-yl)-4,6-bis(1-methyl-1-phenylethyl)phenol (TINUVIN 900, manufactured by BASF); 2-(2H-benzotriazol-2-yl)-6-(1-methyl-1-phenylethyl)-4-(1,1,3,3-tetramethylbutyl)phenol (TINUVIN 928, manufactured by BASF); a reaction product made from methyl-3-(3-(2H-benzotriazol-2-yl)-5-t-butyl-4-hydroxyphenyl)propionate/polyethylene glycol 300 (TINUVIN1130, manufactured by BASF); 2-(2H-benzotriazol-2-yl)-p-cresol (TINUVIN P, manufactured by BASF); 2(2H-benzotriazole-2-yl)-4-6-bis(1-methyl-1-phenylethyl)phenol (TINUVIN 234, manufactured by BASF); 2-[5-chloro(2H)-benzotriazol-2-yl]-4-methyl-6-(tert-butyl)phenol (TINUVIN 326, manufactured by BASF); 2-(2H-benzotriazole-2-yl)-4,6-di-tert-pentylphenol (TINUVIN 328, manufactured by BASF); 2-(2H-benzotriazole-2-yl)-4-(1,1,3,3-tetramethylbutyl)phenol (TINUVIN 329, manufactured by BASF); a reaction product made from methyl 3-(3-(2H-benzotriazol-2-yl)-5-tert-butyl-4-hydroxyphenyl)propionate and polyethylene glycol 300 (TINUVIN 213, manufactured by BASF); 2-(2H-benzotriazol-2-yl)-6-dodecyl-4-methylphenol (TINUVIN571, manufactured by BASF); and 2-[2-hydroxy-3-(3, 4, 5, 6-tetrahydrophthalimide-methyl)-5-methylphenyl]benzotriazole (Sumisorb 250, manufactured by Sumitomo Chemical Co., Ltd.).

Examples of the benzophenone-based ultraviolet absorbing agent (benzophenone-based compound) and oxybenzophenone-based ultraviolet absorbing agent (oxybenzophenone-based compound) include 2,4-dihydroxybenzophenone, 2-hydroxy-4-methoxybenzophenone, 2-hydroxy-4-methoxy benzophenone-5-sulfonic acid ((anhydride and trihydride), 2-hydroxy-4-octyloxybenzophenone, 4-dodecyloxy-2-hydroxy benzophenone, 4-benzyloxy-2-hydroxybenzophenone, 2,2',4,4'-tetrahydroxybenzophenone (Seesorb 106, manufactured by SHIPRO KASEI KAISHA, LTD.), and 2,2'-dihydroxy-4,4-dimethoxybenzophenone.

Examples of the salicylic acid ester-based ultraviolet absorbing agent (salicylic acid ester-based compound) include phenyl-2-acryloyloxybenzoate, phenyl-2-acryloyloxy-3-methylbenzoate, phenyl-2-acryloyloxy-4-methylbenzoate, phenyl-2-acryloyloxy-5-methylbenzoate, phenyl-2-acryloyloxy-3-methoxybenzoate, phenyl-2-hydroxybenzoate, phenyl-2-hydroxy-3-methylbenzoate, phenyl-2-hydroxy-4-methylbenzoate, phenyl-2-hydroxy-5-methylbenzoate, phenyl 2-hydroxy-3-methoxybenzoate, and 2,4-di-tert-butylphenyl-3,5-di-tert-butyl-4-hydroxybenzoate (TINUVIN 120, manufactured by BASF).

Examples of the cyanoacrylic acid-based ultraviolet absorbing agent (cyanoacrylic acid-based compound) include alkyl-2-cyanoacrylate, cycloalkyl-2-cyanoacrylate, alkoxyalkyl-2-cyanoacrylate, alkenyl-2-cyanoacrylate, and alkynyl-2-cyanoacrylate.

An absorption spectrum of the ultraviolet absorbing agent preferably has a maximum absorption wavelength present in a wavelength region of 300 to 400 nm and more preferably a wavelength region of 320 to 380 nm. When a plurality of absorption maxima are present in the spectral absorption spectrum in the wavelength region of 300 nm to 460 nm, the maximum absorption wavelength means the wavelength of the absorption maximum showing the maximum absorbance out of the maxima.

The solution of the ultraviolet absorbing agent may further contain a dye compound having a maximum absorption wavelength in an absorption spectrum present in a wavelength region of 380 to 430 nm. Alternatively, the solution of the dye compound may be applied to the pressure-sensitive adhesive layer 10a independently of the solution of the ultraviolet absorbing agent. The absorption spectrum of the dye compound more preferably has a maximum absorption wavelength present in a wavelength region of 380 to 420 nm. The solution of the dye compound may be a solution in which the dye compound is dissolved in a solvent.

By applying the solution containing the dye compound having a maximum absorption wavelength in an absorption spectrum present in a wavelength region of 380 to 430 nm, in addition to an ultraviolet absorbing agent, to the pressure-sensitive adhesive layer 10a, light in a wavelength region (380 nm to 430 nm) corresponding to a wavelength longer than the ultraviolet absorbing agent is sufficiently absorbed, and thus deterioration of the organic EL element or the like can be suppressed more sufficiently.

Examples of the dye compound include an organic dye compound or an inorganic dye compound. Of these, an organic dye compound is preferable from the viewpoint of dispersibility in a resin component, such as a base polymer, and the maintenance of transparency.

Examples of the organic dye compound include an azomethine-based compound, an indole-based compound, a cinnamic acid-based compound, a pyrimidine-based compound, a porphyrin-based compound, and a cyanine-based compound.

A commercially available product may be suitably used as the organic dye compound, and specific examples of the indole-based compound include BONASORB UA3911 (trade name; maximum absorption wavelength of its absorption spectrum: 398 nm; half-width: 48 nm; manufactured by Orient Chemical Industries Co., Ltd.), of the cinnamic acid-based compound include SOM-5-0106 (trade name; maximum absorption wavelength of its absorption spectrum: 416 nm; half-width: 50 nm; manufactured by Orient Chemical Industries Co., Ltd.), of the porphyrin-based compound include FDB-001 (trade name; maximum absorption wavelength of its absorption spectrum: 420 nm; half-width: 14 nm; manufactured by Yamada Chemical Co., Ltd.), and of the cyanine-based compound include a merocyanine compound (trade name: FDB-009; maximum absorption wavelength of its absorption spectrum: 394 nm; half-width: 43 nm; manufactured by Yamada Chemical Co., Ltd.).

The solvent is not particularly limited as long as it can dissolve the ultraviolet absorbing agent and/or the dye compound and swell the pressure-sensitive adhesive layer 10a, but a non-aqueous solvent is preferable since an aqueous solvent has poor wettability to the pressure-sensitive adhesive layer and the additive does not easily infiltrate. Examples of the non-aqueous solvent include, but not particularly limited to, esters such as methyl acetate, ethyl acetate, isopropyl acetate, and butyl acetate; alcohols such as methanol, ethanol, n-propanol, isopropanol, n-butanol, isobutanol, sec-butanol, and tert-butanol; aromatic hydrocarbons such as toluene, xylene, and ethylbenzene; ketones such as acetone, methyl ethyl ketone, and methyl isobutyl ketone; alicyclic ketones such as cyclopentanone and cyclohexanone; aliphatic hydrocarbons such as hexane, heptane, and octane; alicyclic hydrocarbons such as cyclohexane; halogenated hydrocarbons such as chloroform, dichloromethane, and 1,2-dichloroethane; ethers such as diethyl ether, dimethoxyethane, tetrahydrofuran, and dioxane; amides such as N,N-dimethylformamide and N,N-dimethylacetamide; and nitriles such as acetonitrile, propionitrile, and benzonitrile, and esters, alcohols, aromatic hydrocarbons, and ketones are preferable. The solvent can also be used alone or in combination of two or more.

The concentration of the ultraviolet absorbing agent in the solution can be appropriately set according to the desired ultraviolet absorbing function to be imparted to the pressure-sensitive adhesive layer 10a and for example, can be selected from the range of, in terms of the upper limit, 50% by weight or less (e.g., 1 to 50% by weight, 1 to 45% by weight, 1 to 40% by weight, 1 to 35% by weight, 1 to 30% by weight, 1 to 25% by weight, 1 to 20% by weight, and 1 to 15% by weight); or in terms of the lower limit, 1% or more (e.g., 1 to 50% by weight, 2 to 50% by weight, 3 to 50% by weight, 4 to 50% by weight, and 5 to 50% by weight). If the concentration of the ultraviolet absorbing agent in the solution is within this range, the ultraviolet absorbing agent can be dissolved, the pressure-sensitive adhesive layer 10a can be sufficiently swollen, and an appropriate ultraviolet absorbing function may be imparted to the pressure-sensitive adhesive layer 10a.

When the solution of the ultraviolet absorbing agent contains the dye compound, or when the solution of the dye compound is applied separately, the concentration of the dye compound can be set appropriately and selected from the range of, for example, 1 to 50% by weight, preferably 2 to 40% by weight, more preferably 3 to 30% by weight, and even more preferably 5 to 20% by weight. If the concentration of the dye compound in the solution is within this range, the dye compound can be dissolved, and an appropriate absorbing function in a wavelength region longer than the ultraviolet rays can be imparted to the pressure-sensitive adhesive layer 10a.

For the application (coating) to the pressure-sensitive adhesive layer 10a in the solution 12, it is possible to use known coating processes, and examples thereof include a coater, such as a gravure roll coater a reverse roll coater, a kiss roll coater, a dip roll coater, a bar coater, a knife coater, a spray coater, a comma coater, or a direct coater.

The amount of the ultraviolet absorbing agent and/or the dye compound in the solution applied to the pressure-sensitive adhesive layer 10a can be appropriately set according to the desired ultraviolet absorbing function to be imparted to the pressure-sensitive adhesive layer 10a and for example, can be selected from the range of 1 to 1000 µg/cm², preferably 1 to 500 µg/cm², more preferably 1 to 100 µg/cm², and even more preferably 1 to 50 µg/cm². If the amount of the ultraviolet absorbing agent and/or the dye compound in the solution applied is within this range, the ultraviolet absorbing agent and/or the dye compound can be dissolved, and sufficient absorbing functions in the ultraviolet ray and/or longer-wavelength region can be imparted to the pressure-sensitive adhesive layer 10a.

After the solution of the ultraviolet absorbing agent and/or the dye compound is applied to the pressure-sensitive adhesive layer 10a, it may be allowed to stand to cause the ultraviolet absorbing agent and/or the dye compound to infiltrate, if necessary. The standing time is not particularly limited, and can be appropriately selected, for example, within 15 minutes and can be selected from the range of, for example, 1 second to 10 minutes and preferably 5 seconds to 5 minutes. The standing temperature can be room temperature (approximately 10 to 30°C). When allowed to stand under the above conditions, the ultraviolet absorbing agent and/or the dye compound can sufficiently infiltrate the pressure-sensitive adhesive layer 10a.

A heat-drying temperature in the drying step is preferably 40 to 200°C, more preferably 50 to 180°C, and even more preferably 70 to 170°C. The drying time may be adopted as appropriate and is, for example, 5 seconds to 20 minutes, preferably 5 seconds to 10 minutes, and more preferably 10 seconds to 5 minutes. The pressure-sensitive adhesive layer 10a can be returned to a state close to that before application by drying it under the above conditions.

Figure 2(a) is a cross-sectional view illustrating one embodiment of the pressure-sensitive adhesive sheet according to the second aspect of the present invention, and Figure 2(b) is a cross-sectional view illustrating another embodiment of the pressure-sensitive adhesive sheet according to the second aspect of the present invention.

Referring to Figure 2(a), a pressure-sensitive adhesive sheet 2A according to one embodiment of the present invention is composed of: an optically transparent pressure-sensitive adhesive layer 21, wherein no support is laminated onto one of opposite principal surfaces, a first principal 21a, of the pressure-sensitive adhesive layer 21; and a support S1 being a release sheet laminated onto the other principal surface, a second principal surface 21b, of the pressure-sensitive adhesive layer 21.

Referring to Figure 2(b) a pressure-sensitive adhesive sheet 2B according to one embodiment of the present invention is composed of: an optically transparent pressure-sensitive adhesive layer 21; a first support S2 being a release sheet laminated onto one of opposite principal surfaces, a first principal 21a, of the pressure-sensitive adhesive layer 21; and a second support S1 being a release sheet laminated onto the other principal surface, a second principal surface 21b, of the pressure-sensitive adhesive layer 21. The pressure-sensitive adhesive sheet 2B can be obtained by laminating the support S2 onto the first principal surface 21a of the pressure-sensitive adhesive sheet 2A.

In Figures 2 (a) and (b), the dotted line X-X' is a line dividing the pressure-sensitive adhesive layer 21 into two equal portions in a thickness direction. When the thickness of the pressure-sensitive adhesive layer 21 is not uniform, the dotted line X-X' is a line bisecting the thickness at each point.

In Figure 2, the pressure-sensitive adhesive layer 21 is a single layer comprising a transparent light-cured base pressure-sensitive adhesive material and having two opposite principal surfaces (first and second principal surfaces). The pressure-sensitive adhesive layer 21 is formed through the pressure-sensitive adhesive layer forming step and the pressure-sensitive adhesive layer curing step and is equivalent to the pressure-sensitive adhesive layer 10a in Figure 1. Therefore, the pressure-sensitive adhesive layer 21 is preferably a cured by ultraviolet irradiation pressure-sensitive adhesive layer.

The "single layer" of the pressure-sensitive adhesive layer means that it does not have a laminated structure. For example, a formation of a pressure-sensitive adhesive layer comprising a transparent light-cured base pressure-sensitive adhesive material with a pressure-sensitive adhesive layer comprising the same transparent light-cured base pressure-sensitive adhesive material formed thereon has a laminated structure, not a single layer. Similarly, a formation of a pressure-sensitive adhesive layer comprising a transparent light-cured base pressure-sensitive adhesive material in which ultraviolet absorbing agents are dissolved with a pressure-sensitive adhesive layer comprising a transparent light-cured base pressure-sensitive adhesive material in which ultraviolet absorbing agents are dissolved at different concentrations formed thereon has a laminated structure, not a single layer.

The thickness of the pressure-sensitive adhesive layer 21 is not particularly limited but is typically 5 µm to 500 um, preferably 5 µm to 400 pm, even more preferably 50 µm to 400 µm. If the thickness of the pressure-sensitive adhesive layer 21 is in this range, it is preferable to form a concentration gradient of the ultraviolet absorbing agents in the thickness direction of the pressure-sensitive adhesive layer 21.

As measured according to JIS K7361, total light transmittance of the entire pressure-sensitive adhesive layer 21 is not particularly limited but is preferably 80% or more and preferably 90% or more. The higher total light transmittance of the pressure-sensitive adhesive layer 21 provides better results. Furthermore, a haze value thereof is preferably 1.5% or less and more preferably 1% or less.

The ultraviolet absorbing agent 11 is dissolved in the pressure-sensitive adhesive layer 21. In the above solution infiltration step, the ultraviolet absorbing agent can be dissolved in the pressure-sensitive adhesive layer by causing the ultraviolet absorbing agent to infiltrate the pressure-sensitive adhesive layer. Herein, "dissolution" means, for example, that the ultraviolet absorbing agent dissolves to such an extent that the transparency of the pressure-sensitive adhesive layer can be maintained, i.e., white turbidity caused by light scattering of the ultraviolet absorbing agent does not occur. Specifically, the ultraviolet absorbing agent is preferably contained in the pressure-sensitive adhesive layer so that the haze value of the pressure-sensitive adhesive layer is 1.5% or less and preferably 1% or less. Even when the dye compound is contained in the pressure-sensitive adhesive layer 21, the dye compound is dissolved in the pressure-sensitive adhesive layer.

The ultraviolet absorbing agent 11 is formed by causing the ultraviolet absorbing agent 11 to infiltrate pressure-sensitive adhesive layer 21 through the solution application step, the solution infiltration step, and the drying step, and as illustrated in Figure 2, a concentration gradient of the ultraviolet absorbing agent 11 may occur in the thickness direction of the pressure-sensitive adhesive layer 21. Therefore, in a case where the single pressure-sensitive adhesive layer 21 is divided into two equal portions in a thickness direction, the concentration of the ultraviolet absorbing agent in the area to which one of the two principal surfaces, the first principal surface 21a, belongs is different from the concentration of the ultraviolet absorbing agent in the area to which the other principal surface, the second principal surface 21b, belongs. The scope of the present invention also includes a case where no ultraviolet absorbing agent is present in a region where the concentration of the ultraviolet absorbing agent is lower (the concentration of the ultraviolet absorbing agent is 0). Similarly, when the dye compound is dissolved in the pressure-sensitive adhesive layer 21, a concentration difference or concentration gradient may occur between the front and back of the pressure-sensitive adhesive layer.

The concentration of the ultraviolet absorbing agent and/or the dye compound in the area to which the first principal surface belongs and the concentration of the ultraviolet absorbing agent and/or the dye compound in the area to which the second principal surface belongs mean the average concentration of the ultraviolet absorbing agent and/or the dye compounds in each region if there is also a concentration gradient in each region.

Figure 2(a) illustrates an embodiment in which the second principal surface 21b faces the support S1, and the concentration of the ultraviolet absorbing agent in the area to which the first principal surface 21a belongs is higher than the concentration of the ultraviolet absorbing agent in the area to which the second principal surface 21b belongs, and this can be obtained by applying a solution of the ultraviolet absorbing agent to the first principal surface 21a to cause the ultraviolet absorbing agent into the pressure-sensitive adhesive layer 21 to infiltrate in a dissolved state from the first principal surface 21a over a depth in the thickness direction.

The pressure-sensitive adhesive sheet according to the second aspect of the present invention can minimize changes in physical properties, including differences in physical properties such as pressure-sensitive adhesiveness and viscoelasticity between the front and the back.

For example, the difference between an adhesive strength (N/10 mm) of the first principal surface and an adhesive strength (N/10 mm) of the second principal surface is, for example, 1.0 N/10 mm or less, preferably 0.5 N/10 mm or less, and more preferably 0.3 N/10 mm or less.

The pressure-sensitive adhesive sheet according to the second aspect of the present invention can be used for bonding a transparent optical element to another optical element in an image display device, such as a liquid crystal image display device or an organic EL image display device. Examples of the optical elements include various types of transparent optical elements, such as a polarizing film, a retardation film, and a transparent cover element including a cover glass. The optical elements of the present invention may also include a glass substrate in which a transparent electroconductive layer such as a patterned ITO film is formed. The pressure-sensitive adhesive sheet according to the second aspect of the present invention may also be used suitably as a surface protective film to prevent scratches or adherence of stains on the optical elements.

Figure 3 is a cross-sectional view of an optical element laminate presented as one example of the simplest embodiment using a pressure-sensitive adhesive sheet according to the present invention. Referring to Figure 3, the optical element laminate 3 is composed of: an optically transparent, first optical element 31; and a second optical element 32 bonded to the first optical element 31 through an optically transparent pressure-sensitive adhesive layer 21. The optical element laminate 3 is obtained by peeling off the supports S1 and S2 from the pressure-sensitive adhesive sheet 2B illustrated in 2(b) to laminate them to the first and second optical elements. The transparent, first optical element 31 and second optical element 32 may be composed of: an optical film for use in an optical display device, such as a polarizing film or a retardation film; or a transparent cover element such as a viewing-side cover glass of an optical display device. The first optical element 31 and the second optical element 32 are respectively bonded to the first principal surface 21a and the second principal surface 21b of the pressure-sensitive adhesive layer 21.

Figure 4 is a cross-sectional view illustrating an embodiment in which the pressure-sensitive adhesive layer 21 is applied to a configuration obtained by forming a transparent electroconductive layer 42 such as a patterned ITO film on a pressure-sensitive adhesive layer-side surface of the optical element 41 to make up a touch panel sensor. In this case, examples of the optical element 41 include a glass substrate of a display panel, for example, in a liquid crystal display device or an organic EL display device.

As illustrated in Figure 4, the principal surface 21b of the pressure-sensitive adhesive layer 21 is bonded to both the pressure-sensitive adhesive layer-side surface of the second optical element 41 and the transparent electroconductive layer 42 so as to fill up a stepped space between the optical element 41 and the transparent electroconductive layer 42. This configuration can be obtained by removing the support S2 from the pressure-sensitive adhesive sheet 2B illustrated in Figure 2(b), then bonding the optical element 41 on which the transparent electroconductive layer 42 is formed to the principal surface 21b, and peeling off the support S1, if necessary.

### Examples

The present invention will be described in more detail below based on Examples, but the present invention is not limited to these Examples.

### (Preparation of Pressure-Sensitive Adhesive Sheet A)

To a monomer mixture composed of 66 parts by weight of 2-ethylhexyl acrylate (2EHA), 19 parts by weight of 2-hydroxyethyl acrylate (HEA), and 15 parts by weight of N-vinyl-2-pyrrolidone (NVP) was incorporated 0.035 parts by weight of a photopolymerization initiator (trade name "IRGACURE 184", manufactured by BASF) and 0.035 parts by weight of a photopolymerization initiator (trade name "IRGACURE 651", manufactured by BASF). The resultant was then irradiated with ultraviolet rays until the viscosity thereof (measuring conditions: a BH viscometer No. 5 rotor; 10 rpm; and measuring temperature: 30°C) turned to about 20 Pa·s to yield a prepolymer composition in which the monomer components were partially polymerized.

Next, to the prepolymer composition was added 0.15 parts by weight of hexanediol diacrylate (HDDA) and mixed to yield an acrylic pressure-sensitive adhesive composition. The above acrylic pressure-sensitive adhesive composition was applied onto a release-treated surface of a release film (trade name: "MRF #38", manufactured by Mitsubishi Plastics, Inc.) such that the thickness thereof after being formation of a pressure-sensitive adhesive layer becomes 100 µm to form a pressure-sensitive adhesive composition layer. Then, a release film (trade name: "MRN #38", manufactured by Mitsubishi Plastics, Inc.) was laminated onto a surface of the pressure-sensitive adhesive composition layer. Thereafter, the pressure-sensitive adhesive composition layer was light-cured by performing irradiation with ultraviolet rays under conditions of an illuminance of 5 mW/cm² and a light quantity of 1500 mJ/cm² to form a pressure-sensitive adhesive sheet A.

### (Preparation of Pressure-Sensitive Adhesive Sheet B)

A pressure-sensitive adhesive sheet B was formed in the same manner as the pressure-sensitive adhesive sheet A except that the amount of hexanediol diacrylate (HDDA) added was set to 0.1 parts by weight.

### (Preparation of Pressure-Sensitive Adhesive Sheet C)

A pressure-sensitive adhesive sheet C was formed in the same manner as the pressure-sensitive adhesive sheet A, except that 96 parts by weight of butyl acrylate (BA) and 4 parts by weight of acrylic acid (AA) were used as the monomer mixture; 0.1 parts by weight of 2-hydroxyethyl acrylate (HEA) was used instead of hexanediol diacrylate (HDDA); and a thickness thereof after being formed as a pressure-sensitive adhesive layer was set to 23 µm.

### (Preparation of Pressure-Sensitive Adhesive Sheet D)

A pressure-sensitive adhesive sheet D was formed in the same manner as the pressure-sensitive adhesive sheet A, except that 57 parts by weight of butyl acrylate (BA), 23 parts by weight of 4-hydroxybutyl acrylate (4HBA), 8 parts by weight of 2-hydroxyethyl acrylate (HEA), and 12 parts by weight of cyclohexyl acrylate (CHA) were used as the monomer mixture; 0.02 parts by weight of dipentaerythritol hexaacrylate (DPHA) was used instead of hexanediol diacrylate (HDDA); and a thickness thereof after being formed as a pressure-sensitive adhesive layer was set to 150 µm.

### (Preparation of Pressure-Sensitive Adhesive Sheet E)

A pressure-sensitive adhesive sheet E was formed in the same manner as the pressure-sensitive adhesive sheet A, except that 29 parts by weight of 2-ethylhexyl acrylate (2EHA), 21 parts by weight of 4-hydroxybutyl acrylate (4HBA), 29 parts by weight of isostearyl acrylate (ISTA), and 21 parts by weight of isobornyl acrylate (IBXA) were used as the monomer mixture.

### (Preparation of Pressure-Sensitive Adhesive Sheet F)

A pressure-sensitive adhesive sheet F was formed in the same manner as the pressure-sensitive adhesive sheet A, except that 41 parts by weight of 2-ethylhexyl acrylate (2EHA), 1 part by weight of 4-hydroxybutyl acrylate (4HBA), 17 parts by weight of N-vinyl-2-pyrrolidone (NVP), and 41 parts by weight of isostearyl acrylate (ISTA) were used as the monomer mixture; and 0.02 parts by weight of trimethylolpropane triacrylate (TMPTA) was used instead of hexanediol diacrylate (HDDA).

### (Example 1)

A release film was removed from one of opposite principal surfaces (referred to as "first surface") of the pressure-sensitive adhesive sheet A, and the exposed first surface was coated with a 10% by weight concentration ethyl acetate solution of an ultraviolet absorbing agent (Tinosorb S, manufactured by BASF) by using a Wire Wound Rod type, No. 7 bar coater, manufactured by RD Specialties. After application, the pressure-sensitive adhesive sheet A was heated and dried in an oven at 110°C for 2 minutes, and then the solvent was volatilized and eliminated to yield a pressure-sensitive adhesive sheet A containing the pressure-sensitive adhesive layer in which the ultraviolet absorbing agent was dissolved.

### (Example 2)

A pressure-sensitive adhesive sheet A containing a pressure-sensitive adhesive layer in which an ultraviolet absorbing agent and a dye compound were dissolved was obtained in the same manner as in Example 1, except that a solution of Tinosorb S (manufactured by BASF) as the ultraviolet absorbing agent and FDB-009 (manufactured by Yamada Chemical Co., Ltd.; maximum absorption wavelength of its absorption spectrum: 394 nm) as the dye compound, each of which was dissolved in ethyl acetate at 10% by weight, was applied.

### (Comparative Example 1)

The release film was removed from the first surface of the pressure-sensitive adhesive sheet A to prepare the pressure-sensitive adhesive sheet A to which no solution of the ultraviolet absorbing agent is applied as Comparative Example 1.

### (Example 3)

A pressure-sensitive adhesive sheet B containing a pressure-sensitive adhesive layer in which an ultraviolet absorbing agent (Tinuvin 928, manufactured by BASF) was dissolved was obtained in the same manner as in Example 1, except that the pressure-sensitive adhesive sheet B was used and an ethyl acetate solution of the ultraviolet absorbing agent in a concentration of 12% by weight was applied thereto.

### (Example 4)

A pressure-sensitive adhesive layer B in which an ultraviolet absorbing agent (Tinuvin 928, manufactured by BASF) was dissolved was obtained in the same manner as in Example 1, except that the pressure-sensitive adhesive sheet B was used and a methyl ethyl ketone solution of the ultraviolet absorbing agent in a concentration of 12% by weight was applied thereto.

### (Example 5)

A pressure-sensitive adhesive sheet B containing a pressure-sensitive adhesive layer in which an ultraviolet absorbing agent (Seesorb 106, manufactured by SHIPRO KASEI KAISHA, LTD.) was dissolved was obtained in the same manner as in Example 1, except that the pressure-sensitive adhesive sheet B was used and an ethyl acetate solution of the ultraviolet absorbing agent in a concentration of 15% by weight was applied thereto.

### (Comparative Example 2)

The release film was removed from the first surface of the pressure-sensitive adhesive sheet B to prepare the pressure-sensitive adhesive sheet B to which no solution of the ultraviolet absorbing agent is applied as Comparative Example 2.

### (Example 6)

A pressure-sensitive adhesive sheet C containing a pressure-sensitive adhesive layer in which an ultraviolet absorbing agent (Tinosorb S, manufactured by BASF) was dissolved was obtained in the same manner as in Example 1 except that the pressure-sensitive adhesive sheet C was used.

### (Example 7)

A pressure-sensitive adhesive sheet C containing a pressure-sensitive adhesive layer in which an ultraviolet absorbing agent (Tinuvin 928, manufactured by BASF) was dissolved was obtained in the same manner as in Example 1, except that the pressure-sensitive adhesive sheet C was used, and an ethyl acetate solution of the ultraviolet absorbing agent in a concentration of 12% by weight was applied thereto.

### (Example 8)

A pressure-sensitive adhesive sheet C containing a pressure-sensitive adhesive layer in which an ultraviolet absorbing agent (Tinuvin 928, manufactured by BASF) was dissolved was obtained in the same manner as in Example 1, except that the pressure-sensitive adhesive sheet C was used, and a methyl ethyl ketone solution of the ultraviolet absorbing agent in a concentration of 12% by weight was applied thereto.

### (Example 9)

A pressure-sensitive adhesive sheet C containing a pressure-sensitive adhesive layer in which an ultraviolet absorbing agent (Seesorb 106, manufactured by SHIPRO KASEI KAISHA, LTD.) was dissolved was obtained in the same manner as in Example 1, except that the pressure-sensitive adhesive sheet C was used and an ethyl acetate solution of the ultraviolet absorbing agent in a concentration of 15% by weight was applied thereto.

### (Comparative Example 3)

The release film was removed from the first surface of the pressure-sensitive adhesive sheet C to prepare the pressure-sensitive adhesive sheet C to which no solution of the ultraviolet absorbing agent is applied as Comparative Example 3.

### (Comparative Example 4)

A pressure-sensitive adhesive sheet C containing no ultraviolet absorbing agent was obtained in the same manner as in Example 1, except that the pressure-sensitive adhesive sheet C was used and ethyl acetate containing no ultraviolet absorbing agent was applied thereto.

### (Example 10)

A pressure-sensitive adhesive sheet D containing a pressure-sensitive adhesive layer in which an ultraviolet absorbing agent (Tinosorb S, manufactured by BASF) was dissolved was obtained in the same manner as in Example 1 except that the pressure-sensitive adhesive sheet D was used.

### (Comparative Example 5)

The release film was removed from the first surface of the pressure-sensitive adhesive sheet D to prepare the pressure-sensitive adhesive sheet D to which no solution of the ultraviolet absorbing agent is applied as Comparative Example 5.

### (Example 11)

A pressure-sensitive adhesive sheet E containing a pressure-sensitive adhesive layer in which an ultraviolet absorbing agent (Tinosorb S, manufactured by BASF) was dissolved was obtained in the same manner as in Example 1 except that the pressure-sensitive adhesive sheet E was used.

### (Comparative Example 6)

The release film was removed from the first surface of the pressure-sensitive adhesive sheet F to prepare the pressure-sensitive adhesive sheet E to which no solution of the ultraviolet absorbing agent is applied as Comparative Example 6.

### (Example 12)

A pressure-sensitive adhesive sheet F containing a pressure-sensitive adhesive layer in which an ultraviolet absorbing agent (Tinosorb S, manufactured by BASF) was dissolved was obtained in the same manner as in Example 1 except that the pressure-sensitive adhesive sheet F was used.

### (Comparative Example 7)

The release film was removed from the first surface of the pressure-sensitive adhesive sheet F to prepare the pressure-sensitive adhesive sheet F to which no solution of the ultraviolet absorbing agent is applied as Comparative Example 7.

### (Comparative Example 8)

A pressure-sensitive adhesive sheet F containing no ultraviolet absorbing agent was obtained in the same manner as in Example 1, except that the pressure-sensitive adhesive sheet F was used and ethyl acetate containing no ultraviolet absorbing agent was applied thereto.

### (Comparative Example 9)

A pressure-sensitive adhesive sheet having a pressure-sensitive adhesive layer in which an ultraviolet absorbing agent (Tinosorb S, manufactured by BASF) was uniformly dissolved was obtained in the same manner as the pressure-sensitive adhesive sheet D, except that 70 parts by weight of butyl acrylate (BA), 14 parts by weight of 4-hydroxybutyl acrylate (4HBA), and 16 parts by weight of N-vinyl-2-pyrrolidone (NVP) were used as a monomer mixture; and 0.0009 parts by weight of the ultraviolet absorbing agent was incorporated into an acrylic pressure-sensitive adhesive composition.

The following evaluations were carried out using the pressure-sensitive adhesive sheets obtained in Examples 1 to 12 and Comparative Examples 1 to 8 above.

### <Transmittance Evaluation>

The release films of the pressure-sensitive adhesive sheets obtained in Examples and Comparative Examples were each peeled off and evaluated using a spectrophotometer (U4100, manufactured by Hitachi High-Tech Science Corporation) for optical wavelength-based transmittance (wavelength range: 300 to 800 nm). Transmittance (%) at 380 nm and 420 nm are shown in Table 1.

### <Adhesive Strength Evaluation>

The release films of the pressure-sensitive adhesive sheets obtained in Examples and Comparative Examples were each peeled off. The surface to which the ultraviolet absorbing agent solution was applied is the first surface, while the opposite principal surface is the second surface.

The obtained pressure-sensitive adhesive sheets were each cut into a width of 100 mm and a length of 100 mm, the first or the second surface was laminated onto alkali glass, and a PET film (thickness: 25 um) was laminated onto the opposite surface and pressed by a hand roller, then heated and pressurized (5 atm, 50°C) in an autoclave for 15 minutes. The test piece thus obtained was measured for the adhesive strength (N/10 mm) using an autograph (tensile speed: 60 mm/min; peeling angle: 180°). Three test pieces were prepared for each condition in the measurement, and their number average values were taken. Adhesive strength (N/10 mm) of the first and second surfaces to the alkali glass and the difference between them are shown in Table 1.

### [Table 1]

**(Table 1)**

| | Pressure-sensitive adhesive sheet | Ultraviolet absorbing agent solution | | | | Adhesive strength [N/10 mm] | | | Transmittance [%] | |
|---|---|---|---|---|---|---|---|---|---|---|
| | | Ultraviolet absorbing agent | Dye compound | Solvent | Concentration [w%] | First surface | Second surface | Difference* | 380nm | 420nm |
| Example 1 | A | Tinosorb S | - | Ethyl acetate | 10 | 5.9 | 6.8 | 0.9 | 3.2 | 90.9 |
| Example 2 | | Tinosorb S | FDB-009 | Ethyl acetate | 10 | 7.1 | 6.2 | 0.9 | 0.0 | 34.0 |
| Comparative Example 1 | | Uncoated | | | | 5.6 | 5.9 | 0.3 | 92.1 | 92.3 |
| Example 3 | B | Tinuvin928 | - | Ethyl acetate | 12 | 7.0 | 7.2 | 0.2 | 6.9 | 90.9 |
| Example 4 | | Tinuvin928 | - | Methyl ethyl ketone | 12 | 7.2 | 7.3 | 0.1 | 7.1 | 90.9 |
| Example 5 | | Seesorb106 | - | Ethyl acetate | 15 | 8.6 | 7.7 | -0.9 | 0.0 | 86.7 |
| Comparative Example 2 | | Uncoated | | | | 6.0 | 6.5 | 0.5 | 90.2 | 91.2 |
| Example 6 | C | Tinosorb S | - | Ethyl acetate | 10 | 2.2 | 2.3 | 0.1 | - | - |
| Example 7 | | Tinuvin928 | - | Ethyl acetate | 12 | 2.5 | 2.5 | 0.0 | 8.0 | 91.2 |
| Example 8 | | Tinuvin928 | - | Methyl ethyl ketone | 12 | 2.6 | 2.5 | -0.1 | 6.3 | 91.1 |
| Example 9 | | Seesorb106 | - | Ethyl acetate | 15 | 2.9 | 2.8 | -0.1 | 0.0 | 87.8 |
| Comparative Example 3 | | Uncoated | | | | 2.4 | 2.4 | 0.0 | 90.7 | 91.6 |
| Comparative Example 4 | | - | - | Ethyl acetate | 0 | 2.3 | 2.3 | 0.0 | - | - |
| Example 10 | D | Tinosorb S | - | Ethyl acetate | 10 | - | 5.5 | - | 5.5 | 90.2 |
| Comparative Example 5 | | Uncoated | | | | - | 5.6 | - | 91.0 | 92.3 |
| Example 11 | E | Tinosorb S | - | Ethyl acetate | 10 | 7.7 | 8.0 | 0.3 | 1.8 | 90.8 |
| Comparative Example 6 | | Uncoated | | | | 7.0 | 7.7 | 0.7 | 91.7 | 92.5 |
| Example 12 | F | Tinosorb S | - | Ethyl acetate | 10 | 8.4 | 8.7 | 0.3 | - | - |
| Comparative Example 7 | | Uncoated | | | | 7.6 | 7.6 | 0.0 | - | - |
| Comparative Example 8 | | - | - | Ethyl acetate | 0 | 7.4 | 7.6 | 0.2 | - | - |

| | | | | | | | | | | |
|---|---|---|---|---|---|---|---|---|---|---|
| *: (adhesive strength on second surface - adhesive strength on first surface) | | | | | | | | | | |

From Table 1, it is clear that an excellent ultraviolet absorbing function can be imparted to a pressure-sensitive adhesive layer of the pressure-sensitive adhesive sheet cured by ultraviolet rays by applying an ultraviolet absorbing agent solution to the pressure-sensitive adhesive layer. It is also clear that the wavelength absorption can be selectively controlled even in the ultraviolet region by using different types of ultraviolet absorbing agents and in combination with dye compounds. The difference in the adhesive strength between the first and the second surfaces of the pressure-sensitive adhesive layer was 1.0 N/mm, and it can be seen that the difference in physical properties such as adhesive strength between the front and back of the pressure-sensitive adhesive layer can be minimized by applying a solution of the ultraviolet absorbing agent to the pressure-sensitive adhesive layer of the cured pressure-sensitive adhesive sheet.

### <Evaluation of Distribution of Ultraviolet Absorbing Agent in the Thickness Direction Pressure-Sensitive Adhesive>

In order to examine a distribution state of the ultraviolet absorbing agent (Tinosorb S) in the thickness direction of Example 10 and Comparative Example 9, TOF-SIMS analysis (Ar gas cluster ion etching method) was performed. Samples used were stored for one month after preparation.

The release films of the pressure-sensitive adhesive sheets obtained in Examples 10 and Comparative Examples 9 were each peeled off, and TOF- SIMS analysis was performed from the first surface side under the following measurement conditions. Results are shown in Figure 5. Figure 5(a) shows the results of Example 9, and Figure 5(b) shows the results of Comparative Example 9. In Figure 5, the scale of the left vertical axis indicates the intensity of butyl acrylate (BA, C₃ + H₃ + O₂) and N-vinylpyrrolidone (NVP, C₄ + H₆+ N + O), and the scale of the right vertical axis indicates the intensity of the ultraviolet absorbing agent (Tinosorb S, C₃₀ + H₃₂ + N₃ + O₅).

Analysis device: TOF-SIMS (manufactured by ULVAC-PHI, Inc., TRIFT V)
Etching ion: Ar gas cluster ion
Irradiated primary ion: Bi₃²⁺
Acceleration voltage: 30 kV
Measurement polarity: negative ion

From Figure 5(a), it can be seen that the pressure-sensitive adhesive layer of the pressure-sensitive adhesive sheet of Example 10 has a concentration gradient of the ultraviolet absorbing agent (Tinosorb S) from the first surface to the second surface. On the other hand, from Figure 5(b), it can be seen that the pressure-sensitive adhesive layer of the pressure-sensitive adhesive sheet of Comparative Example 9 has a constant concentration of the ultraviolet absorbing agent (Tinosorb S) distributed from the first surface to the second surface.

Variations of the present invention will be supplementally described below.

### [Supplement 1]

A method for producing a pressure-sensitive adhesive sheet, comprising:
forming a pressure-sensitive adhesive layer formed of a transparent, light-cured base pressure-sensitive adhesive material on a support;
irradiating the pressure-sensitive adhesive layer with an ultraviolet ray to cure the pressure-sensitive adhesive layer;
providing a solution of an ultraviolet absorbing agent;
applying the solution to one of opposite surfaces of the cured pressure-sensitive adhesive layer to cause the ultraviolet absorbing agent contained in the solution to infiltrate from the one surface in a thickness direction of the pressure-sensitive adhesive layer; and
drying the pressure-sensitive adhesive layer.

### [Supplement 2]

The method for producing a pressure-sensitive adhesive sheet according to supplement 1, wherein
the solution of the ultraviolet absorbing agent is a solution in which the ultraviolet absorbing agent is dissolved in a solvent, and
the method comprises drying the pressure-sensitive adhesive layer to evaporate the solvent of the solution.

### [Supplement 3]

The method for producing a pressure-sensitive adhesive sheet according to supplement 1 or 2, wherein the solution of the ultraviolet absorbing agent further comprises a dye compound having a maximum absorption wavelength in an absorption spectrum present in a wavelength region of 380 to 430 nm.

### [Supplement 4]

The method for producing a pressure-sensitive adhesive sheet according to supplement 1 or 2, further comprising providing a solution of a dye compound having a maximum absorption wavelength in an absorption spectrum present in a wavelength region of 380 to 430 nm, and applying the solution to one of opposite surfaces of the cured pressure-sensitive adhesive layer.

### [Supplement 5]

The method for producing a pressure-sensitive adhesive sheet according to supplement 4, wherein the solution of the dye compound is a solution in which the dye compound is dissolved in a solvent.

### [Supplement 6]

The method for producing a pressure-sensitive adhesive sheet according to any one of supplements 1 to 5, further comprising laminating a release sheet onto a surface of the pressure-sensitive adhesive layer on a side opposite to the support.

### [Supplement 7]

The method for producing a pressure-sensitive adhesive sheet according to any one of supplements 1 to 6, wherein a maximum absorption wavelength of the ultraviolet absorbing agent in an absorption spectrum is present in a wavelength region of 300 to 400 nm.

### [Supplement 8]

A pressure-sensitive adhesive sheet having a support and a transparent pressure-sensitive adhesive layer on the support, wherein:
the pressure-sensitive adhesive layer is a single layer comprising a transparent light-cured base pressure-sensitive adhesive material and having two opposite principal surfaces;
an ultraviolet absorbing agent is dissolved in the pressure-sensitive adhesive layer; and
in a case where the single pressure-sensitive adhesive layer is divided into two equal portions in a thickness direction,
a concentration of the ultraviolet absorbing agent in an area to which one of the two principal surfaces, a first principal surface, belongs is different from a concentration of the ultraviolet absorbing agent in an area to which the other principal surface, a second principal surface, belongs.

### [Supplement 9]

The pressure-sensitive adhesive sheet according to supplement 8, wherein a dye compound having a maximum absorption wavelength in an absorption spectrum present in a wavelength region of 380 to 430 nm is further dissolved in the pressure-sensitive adhesive layer.

### [Supplement 10]

The pressure-sensitive adhesive sheet according to supplement 8 or 9, wherein difference between an adhesive strength (N/10 mm) of the first principal surface and an adhesive strength (N/10 mm) of the second principal surface is 1.0 N/10 mm or less.

### [Supplement 11]

The pressure-sensitive adhesive sheet according to any one of supplements 8 to 10, wherein the pressure-sensitive adhesive layer is a pressure-sensitive adhesive layer cured by ultraviolet irradiation.

### [Supplement 12]

The pressure-sensitive adhesive sheet according to any one of supplements 8 to 11, wherein the second principal surface faces the support, and the concentration of the ultraviolet absorbing agent in the area to which the first principal surface belongs is higher than the concentration of the ultraviolet absorbing agent in the area to which the second principal surface belongs.

### [Supplement 13]

The pressure-sensitive adhesive sheet according to any one of supplements 8 to 12, wherein the single light-cured pressure-sensitive adhesive layer has a concentration gradient of the ultraviolet absorbing agent in the thickness direction.

### [Supplement 14]

The pressure-sensitive adhesive sheet according to any one of supplements 8 to 13, wherein the support is a release sheet.

### [Supplement 15]

The pressure-sensitive adhesive sheet according to supplement 14, wherein the support being the release sheet is disposed on each of both surfaces of the pressure-sensitive adhesive layer.

### [Supplement 16]

The pressure-sensitive adhesive sheet according to any one of supplements 8 to 15, wherein a maximum absorption wavelength of the ultraviolet absorbing agent in an absorption spectrum is present in a wavelength region of 300 to 400 nm.

### [Supplement 17]

The pressure-sensitive adhesive sheet according to any one of supplements 8 to 16, wherein the pressure-sensitive adhesive layer has a thickness of 5 to 500 µm.

### Industrial Applicability

The present invention is useful in a method for producing a pressure-sensitive adhesive sheet having a transparent pressure-sensitive adhesive layer that can be used for bonding a transparent optical element to another optical element, and a pressure-sensitive adhesive sheet that can be obtained by the production method.

### Reference Signs List

10 Pressure-sensitive adhesive layer (before curing by ultraviolet ray)
10a Pressure-sensitive adhesive layer (after curing by ultraviolet ray)
S1, S2 Support (release sheet)
U Ultraviolet ray
11 Ultraviolet absorbing agent
12 Solution of ultraviolet absorbing agent
13 Solvent
21 Pressure-sensitive adhesive layer (after curing by ultraviolet ray)
21a Principal surface (first surface)
21b Principal surface (second surface)
31, 32, 34 Optical element
42 Transparent electroconductive layer

## Claims

1. A method for producing a pressure-sensitive adhesive sheet, comprising:
forming a pressure-sensitive adhesive layer formed of a transparent, light-cured base pressure-sensitive adhesive material on a support;
irradiating the pressure-sensitive adhesive layer with an ultraviolet ray to cure the pressure-sensitive adhesive layer;
providing a solution of an ultraviolet absorbing agent;
applying the solution to one of opposite surfaces of the cured pressure-sensitive adhesive layer to cause the ultraviolet absorbing agent contained in the solution to infiltrate from the one surface in a thickness direction of the pressure-sensitive adhesive layer; and
drying the pressure-sensitive adhesive layer.

2. The method for producing a pressure-sensitive adhesive sheet according to claim 1, wherein
the solution of the ultraviolet absorbing agent is a solution in which the ultraviolet absorbing agent is dissolved in a solvent, and
the method comprises drying the pressure-sensitive adhesive layer to evaporate the solvent of the solution.

3. The method for producing a pressure-sensitive adhesive sheet according to claim 1 or 2, wherein the solution of the ultraviolet absorbing agent further comprises a dye compound having a maximum absorption wavelength in an absorption spectrum present in a wavelength region of 380 to 430 nm.

4. The method for producing a pressure-sensitive adhesive sheet according to claim 1 or 2, further comprising providing a solution of a dye compound having a maximum absorption wavelength in an absorption spectrum present in a wavelength region of 380 to 430 nm, and applying the solution to one of opposite surfaces of the cured pressure-sensitive adhesive layer.

5. The method for producing a pressure-sensitive adhesive sheet according to claim 4, wherein the solution of the dye compound is a solution in which the dye compound is dissolved in a solvent.

6. The method for producing a pressure-sensitive adhesive sheet according to any one of claims 1 to 5, further comprising laminating a release sheet onto a surface of the pressure-sensitive adhesive layer on a side opposite to the support.

7. The method for producing a pressure-sensitive adhesive sheet according to any one of claims 1 to 6, wherein a maximum absorption wavelength of the ultraviolet absorbing agent in an absorption spectrum is present in a wavelength region of 300 to 400 nm.

8. A pressure-sensitive adhesive sheet having a support and a transparent light-cured pressure-sensitive adhesive layer on the support, wherein:
the pressure-sensitive adhesive layer is a single layer comprising a transparent base pressure-sensitive adhesive material and having two opposite principal surfaces;
an ultraviolet absorbing agent is dissolved in the pressure-sensitive adhesive layer; and
in a case where the single pressure-sensitive adhesive layer is divided into two equal portions in a thickness direction, a concentration of the ultraviolet absorbing agent in an area to which one of the two principal surfaces, a first principal surface, belongs is different from a concentration of the ultraviolet absorbing agent in an area to which the other principal surface, a second principal surface, belongs.

9. The pressure-sensitive adhesive sheet according to claim 8, wherein a dye compound having a maximum absorption wavelength in an absorption spectrum present in a wavelength region of 380 to 430 nm is further dissolved in the pressure-sensitive adhesive layer.

10. The pressure-sensitive adhesive sheet according to claim 8 or 9, wherein difference between an adhesive strength (N/10 mm) of the first principal surface and an adhesive strength (N/10 mm) of the second principal surface is 1.0 N/10 mm or less.

11. The pressure-sensitive adhesive sheet according to any one of claims 8 to 10, wherein the pressure-sensitive adhesive layer is a pressure-sensitive adhesive layer cured by ultraviolet irradiation.

12. The pressure-sensitive adhesive sheet according to any one of claims 8 to 11, wherein the second principal surface faces the support, and the concentration of the ultraviolet absorbing agent in the area to which the first principal surface belongs is higher than the concentration of the ultraviolet absorbing agent in the area to which the second principal surface belongs.

13. The pressure-sensitive adhesive sheet according to any one of claims 8 to 12, wherein the single, light-cured pressure-sensitive adhesive layer has a concentration gradient of the ultraviolet absorbing agent in the thickness direction.

14. The pressure-sensitive adhesive sheet according to any one of claims 8 to 13, wherein the support is a release sheet.

15. The pressure-sensitive adhesive sheet according to claim 14, wherein the support being a release sheet is disposed on each of both surfaces of the pressure-sensitive adhesive layer.

16. The pressure-sensitive adhesive sheet according to any one of claims 8 to 15, wherein a maximum absorption wavelength of the ultraviolet absorbing agent in an absorption spectrum is present in a wavelength region of 300 to 400 nm.

17. The pressure-sensitive adhesive sheet according to any one of claims 8 to 16, wherein the pressure-sensitive adhesive layer has a thickness of 5 to 500 µm.
